# EUROPEAN PATENT APPLICATION

(11) **EP 0 977 457 A2**
(43) Date of publication of application: **02.02.2000**
(21) Application number: 99111947.0
(22) Date of filing: 23.06.1999
(51) Int. Cl.: H04Q 11/04

(54) **Open control system and VPN creation method for multiprotocol ATM switches**

(30) Priority: 27.07.1998 US 94197 P; 01.02.1999 US 241049; 01.02.1999 US 241052
(71) Applicant: NEC CORPORATION, Tokyo (JP)
(72) Inventor: Dighe, Rajiv, Princeton, New Jersey 08540 (US); Biswas, Subir K., Princeton, New Jersey 08540 (US); Thirumalai, Vasanthi, Princeton, New Jersey 08540 (US); Watanabe, Kojiro, Princeton, New Jersey 08540 (US); Ramamurthy, Gopalakrishnan, Princeton, New Jersey 08540 (US)
(74) Representative: Baronetzky, Klaus, Dipl.-Ing.

(57) **Abstract**

An open control system for an ATM network includes a port hardware access interface (PHAI) providing access to line card resources, and a signaling protocol access interface (SPAI) which is connected to a signaling protocol module and implements switch controller functionality. The PHAI and the SPAI communicate with each other using at least one mechanism such as VPI/VCI, bus-based mechanism and a distributed message passing mechanism. A port resource manager layer (PRML) is provided between the PHAI and the SPAI, which logically partitions available resources and bundling the available resources into logically consistent resource modules.

## Description

The present invention generally relates to an ATM network system composed of ATM switches, and in particular to an open control system and method for implementing open-signaling and virtual private networks (VPNs) within multiprocessor ATM switches.

Contemporary network evolution is driven primarily by a desire for supporting high band-width data and for catering heterogeneous quality of service (QoS) requirement of the end-applications. In most occasions, this is achieved by devising a set of complex signaling protocols that attempt to incorporate the service requirements of the existing and conceivable future applications. An important example of such a conventional signaling protocol is UNI/NNI which was standardized by ATM Forum in 1996. *See* "ATM User Network Interface (UNI) Specification Version 4.0, AF-SIG-0061.000," *ATM Forum,* July 1996; and "Private Network-Network Interface Specification version 1.0, AF-PNNI-0055.000," *ATM Forum,* September 1996. Several other solutions to the signaling problem have also been proposed. *See* "SPANS UNI: Simple Protocol for ATM signaling; Release 3.0," *FORE Systems Inc.,* July 1995; A. Iwata et al, "ATM Connection and Traffic Management Schemes for Multimedia Internetworking," *Communications of the ACM,* vol. 3, pp. 501-508; S. Rooney, "An Innovative Control Architecture for ATM Networks," *Proceedings of IM'97,* San Diego, May 1997; and M. Veeraraghavan, T. F. La Porta and W. S. Lai, "An Alternative Approach to Call/Connection Control in Broadband Switching Systems." *IEEE Communications Magazine,* November 1995, pp. 90-95.

The above-mentioned protocols have several problems. The approach of signaling standardization, followed in these conventional protocols, ignores a current trend of the applications evolving rapidly in a relatively network-independent manner. An inevitable and undesirable consequence is that a new application may not always be supported by the underlying control protocol in the most optimal way. It should be noted that the terms control and switching have been used interchangeably in this disclosure.

The World Wide Web (WWW) provides a case in point. When there is a requirement to obtain multiple bursts of short data segments from multiple destinations, there is no optimal support by the standardized ATM signaling protocols. See P. Newman et al, "Flow Switching: To Switch or Not to Switch," *NSF Workshop on Internet Statistics Measurements,* March 1996. The reason for such a sub-optimal support is that UNI/NNI signaling requires an end-to-end ATM connection to be setup before any IP data can be transported through it.

It was shown that a new control protocol, called IP Switching, can reduce the startup data access latency while being able to exploit the fast switching features which are inherent to ATM. See P. Newman et al, "Flow Switching: To Switch or Not to Switch," *NSF Workshop on Internet Statistics Measurements,* March 1996; and A. Acharya et al, "IP Switching Over Fast ATM Cell Transport (IPSOFACTO)," *Proceedings of IEEE Globecom* '97, Phoenix, Arizona. December 1997.

Another notable example that reveals signaling limitation is the support of location independent applications over fixed ATM infrastructure. It has been shown that major augmentations to ATM signaling are necessary before mobility can be supported within ATM. See A. Acharya, S. K. Biswas. L. J. French, J Li and D. Raychaudhuri, "Handoff and Location management Schemes for Mobile ATM Networks," *Proceedings off the 3rd International Workshop on Mobile Multimedia Communications,* Princeton, NJ, September 1996.

Standard ATM signaling can be used as a means for supporting the existing Personal Communication Services (PCS) over ATM. However, such an approach is complex and time-consuming. See S. K. Biswas and V. Thirumalai, "A Framework for PCS Service Integration within ATM Networks," *NEC USA Technical Report,* February 1998. In general, whenever a new application calls for non-standard end-to-end control information exchange, either the standard UNI/NNI signaling protocol needs to be enhanced or the existing signaling protocol needs to be *replaced* by a customized new protocol.

Protocol replacement is impractical because it hurts interoperability and prevents protocols to be backward compatible. On the other hand, service specific signaling enhancement suffers from large standardization delay. Further, repeated enhancements of a control protocol can result in a complicated protocol that will end up as being difficult to keep track of.

A conventional solution to this problem is the opening of the signaling framework, so that multiple call-control protocols can coexist within the same physical ATM network. *See* J. E. V. D. Merwe and I. M. Leslie, "Switchlets and Dynamic Virtual ATM," *Available from: http://www.cl. cam. ac. uk/Research/SRG/dcan/papers/im97_switchlets.ps.gz.* The essence of this idea is defining a simple low level hardware control interface that can be used by multiple signaling protocols to exercise control on the physical switch.

It is also shown that such a framework can be extended to create multiple soft switches within a physical switch where every soft switch is controlled by a specific control protocol. *See* J. E. V. D. Merwe and I. M. Leslie, "Switchlets and Dynamic Virtual ATM," *Available from: http://www.cl. cam. ac. uk/Research/SRG/dcan/papers/im97_switchlets.ps.gz.* Such a mechanism also provides a means for creating multiple *Virtual* *Private Networks* (VPN) within a single physical infrastructure. *See* C. Scott, P. Wolfe and M. Erwin, "Virtual Private Networks," *IEEE Computer Society Press,* February 1998.

In recent years it has been observed that in addition to increased call volume, the call control protocols are becoming increasingly complex. *See* B. Stiller, "A Survey of UNI Signaling Systems and Protocols for ATM Networks," *ACM Computer Communication Review,* vol. 25, pp. 21-23. It is more so for the services like mobility management, multiparty communication and others which require after-setup control to maintain and enhance an already established connection. A close look to the switch evolution process reveals that while the switching capacity of the data path is growing in keeping with the increasing traffic requirement, most of the switch architectures still rely on a centralized switch controller CPU for signaling protocol execution. As a result, with increasing control complexity the switches may soon run into the problem of being control-bottlenecked while still having the data switching capacity.

An obvious way to tackle this problem is to distribute the control processing load among multiple processing entities within and outside the switch. In one such approach the control processing for a switch is done outside in a general purpose switch controller machine. *See* P. Newman et al, "Ipsilon's General Switch Management Protocol Specification Version 1.1," *Internet RFC 1987,* August 1996. Although this technique serves as a short-term solution it does not fit in a more realistic and desired scenario where the processing capabilities are expected to be within a switch rather than outside it. It is believed that the future generation switching hardware to come with per-port processing capabilities. *See* R. Dighe, "Computing Architecture for Next-generation Switches: Draft Proposal," *NEC USA Internal Document,* May 1996. Therefore, a more general approach where no assumption is made about the physical locations of signaling protocol executions is required. Depending on the instantaneous signaling load on a switch, a particular protocol can be run on any of the available processors within the switch or even outside. This invention provides an architectural framework for implementing location independent ATM signaling in a multiprotocol switch environment.

Further, any software architecture used should provide signaling software modularity. The architecture should be engineered in a way so that new control protocol stacks can easily be incorporated on-line without interrupting the existing services. Modularity should also allow new control processors to be added in a transparent manner so that the management software should be able to dynamically incorporate the new processors and to redistribute control processing accordingly. In order to ensure modularity, part of the software needs to be reusable for different switching platforms.

Furthermore, with the recent proliferation of internet and its services, more and more corporate users are relying on the internet for their day-to-day business requirements. As a result of the customized service demands of today's corporate users, together with individual security concerns, a desire for private networking services is evolving within the enterprise internet user community. Introduction of the Virtual Private Networking (VPN) is aimed at offering customized network services within the existing internet framework. *See* C. Scott, P. Wolfe and M. Erwin, "Virtual Private Networks," *IEEE Computer Society Press,* February 1998 and T. Kato, K. Omachi and S. Tanabe, "BVPN (Broadband Virtual Private Network): A Flexible, High-speed, Enterprise Network Architecture", *Proceedings of the Fifth IEEE Computer Society Conference on Future Trends of Distributed Computing System,* August 1995.

At the highest level of abstraction, a VPN is a logical network which when appropriately configured, can be assigned to a specific multi-site user for the customized service requirements of the user. A logical network is considered to be an overlay on an existing physical network and the resources associated with the physical network. An example of a simple VPN is a Permanent Virtual Circuit (PVC) with resources assigned to it. *See* "ATM User Network Interface (UNI) Specification Version 4.0, AF-SIG-0061.000," *ATM Forum,* July 1996 and "Private Network-Network Interface Specification version 1.0, AF-PNNI-0055.000," *ATM Forum,* September 1996. Once a PVC is allotted to a network customer, within the constraints of the resources reserved for the PVC, the customer can use the virtual circuit completely at the user's discretion. Possible customizations include data multiplexing within the PVC, data compression and end-to-end data encryption. An essential purpose of having a VPN is to provide customized services to a specific customer without affecting the other users of the network.

In the next lower level of abstraction, the VPN uses multiple PVCs for creating an overlay mesh. *See* M. C. Chan, H. Hadama and R. Stadler, "An Architecture for Broadband Virtual Networks under Customer Control," *Proceedings of the IEEE Symposium on Network Operations and Management,* April 1996. Once such a mesh VPN is configured, the owner of the mesh VPN can run a customized signaling protocol to set up connections within the mesh VPN. For a mesh VPN, other customized processes that need to be performed include routing, call admission control, cell-level scheduling, accounting, billing and several other ATM management-plane functions. *See* D. Ginsburg, "ATM: Solutions for Enterprise networking," *Addison- Wesley,* Harlow, UK, 1996.

Conventionally, many forms of VPNs have been defined for both IP and ATM-based internet backbones. *See* "A Framework for IP Based Virtual Private Network," *Internet Draft of Internet Engineering Task Force,* February 1998 and P. Coppo, M. D'Ambrosio and V. Vercellone, "The A-VPN Server: A Solution for ATM Virtual Private Networks", *Proceedings of Singapore ICCS'94*, November 1994. Functionally, these VPNs range from simple end-to-end tunnels (e.g. PVC) to a full-blown overlay of resource-reserved mesh, as described above. Regardless of the model adopted, a network switching device that provides a clean mechanism for partitioning and reserving its resources for the participating VPNs within the network is required.

In order to solve the above-mentioned problems, it is an objective of the present invention to use the idea of open control interface to provide an open control system and method that is capable of supporting multiple signaling protocols within multi-processor ATM switches.

Another objective of the present invention is to provide an architecture for partitioning and reserving resources within ATM switches for creating and maintaining VPNs.

According to an aspect of the present invention, an open control system for an ATM network including a plurality of ATM switches is characterized by a port hardware access interface (PHAI) providing access to line card resources, and a signaling protocol access interface (SPAI) which is connected to a signaling protocol module and implements switch controller functionality. The PHAI and the SPAI communicate with each other using at least one mechanism depending on a processing platform used.

A port resource manager layer (PRML) may be preferably provided between the PHAI and the SPAI, which logically partitions available resources and bundling the available resources into logically consistent resource modules. The available resources may include switching bandwidth, VPI space, VCI space, input buffer space, output buffer space and local processing cycles for cell-level scheduling.

The PRML may partition the available resources based on one of a static and dynamic policy into a plurality of partitioned resource modules, wherein each of the plurality of partitioned resource modules is assigned to a specific administrative entity.

In this manner, the coupling between the switch controller and the line card hardware can be loosed while maintaining standard control interfaces between them. Such an approach provides a framework for implementing distributed signaling and a clean way of supporting multiple control protocols in future generation switching devices. Further, signaling software modularity can be achieved.

According to another aspect of the present invention, the PRML provides a mechanism for logically partitioning available resources and bundling a partitioned resource into VPN (virtual private network) specific resource module (VPNRM). The VPNRMs are allocated to at least one VPN which is overlaid on the ATM network. Each of the VPNRMs is owned by one of the VPNs and the one of the VPNs may be free to choose an authentication and security model for accessing available resources.

By partitioning and reserving resources within ATM switches as described above, VPNs are created and maintained and further VPN software modularity is provided, allowing the reuse of part of the VPN software on varieties switching platforms. Furthermore, a framework can be achieved for VPN service level management for creation, termination and maintenance of the VPNs.
FIG. 1 is a schematic diagram showing the configuration of an ATM network composes of ATM switches each comprised of multiple line-cards each equipped with a microprocessor, and further showing the switch architecture that is targeted for implementing an open control and VPN architecture according to the present invention;
FIG. 2 is a schematic diagram showing a basic open control software architecture according to the present invention;
FIG. 3 is a schematic diagram showing a first arrangement for supporting a port-resource management layer that partitions the port-resources according to a first embodiment of the present invention;
FIG. 4 is a schematic diagram showing a second arrangement for supporting multiple ATM control protocols on a switch port according to the first embodiment of the present invention;
FIG. 5 is a schematic diagram showing a software architecture for a specific switch hardware platform according to a second embodiment of the present invention;
FIG. 6 is a schematic diagram illustrating steps in on-line protocol downloading, according to the present invention;
FIG. 7 is a schematic diagram showing an example of a distributed call processing and call admission control according to the present invention;
FIG. 8A is a schematic diagram showing an architecture allowing a mechanism for local call control;
FIG. 8B is a schematic diagram showing an architecture allowing a mechanism for remote and transparent call control according to the present invention;
FIG. 9 is a schematic diagram showing the components and procedures for distributed switch management according to the present invention;
FIG. 10 is a schematic diagram showing a preferred embodiment of the architecture of the present invention using a flexible programmable ATM access multiplexer;
FIG. 11 is a block diagram showing a conceptual architecture of an ATM access multiplexer according to the preferred embodiment of the architecture of the present invention;
FIG. 12 is a block diagram showing a system architecture of an ATM access multiplexer according to the preferred embodiment of the present invention;
FIG. 13 is a block diagram showing a circuit configuration of a universal interface card (UIF) according to the present invention;
FIG. 14 is a diagram showing an example of a VPN model on ATM switches in an ATM network;
FIG. 15 is a schematic diagram showing port resource management for supporting VPNs according to a third embodiment of the present invention;
FIG. 16 is a schematic diagram showing multiple protocol support for VPNs according to the third embodiment of the present invention;
FIG. 17 is a schematic diagram showing a preferred embodiment of a VPN system according to the present invention; and
FIG. 18 is a diagram illustrating steps in creating VPN services on a switch port.

### ATM SWITCHING SYSTEM

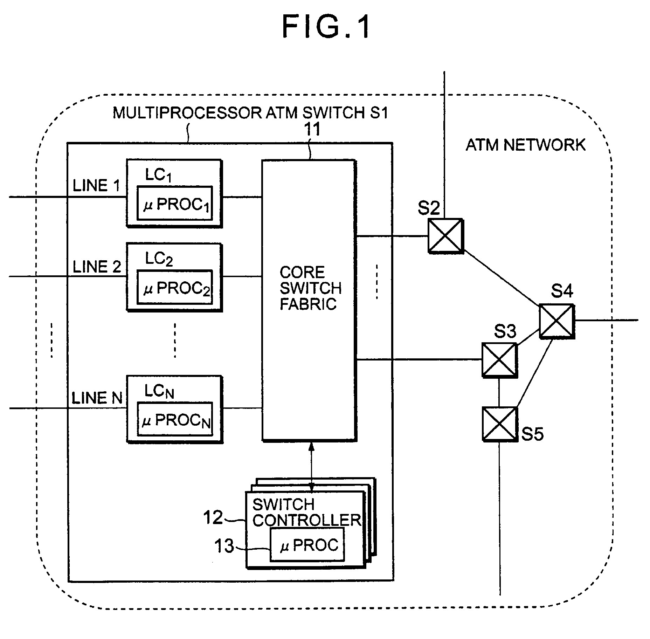

Referring to FIG. 1, an ATM network is composed of a plurality of ATM switches S1, S2, S3 and so on. An ATM switch has a core switch fabric 11, which is controlled by a switch controller 12 including a processor 13. The core switch fabric 11 connects the ATM network and a plurality of line cards LC₁-LC_{N} which are respectively associated with subscriber lines 1-N. The respective line cards LC₁-LC_{N} have microprocessors PROC₁-PROC_{N} therein. As will be described hereinafter, the open-software architecture and the resource and protocol management for VPN can be implemented on the processors within the multiprocessor ATM switches.

### OPEN CONTROL IMPLEMENTATION

Following is a list of several key features of an embodiment of an architecture according to the present invention:
- Open-control within multiprocessor ATM switches;
- Distributed call-processing across the switch processors;
- Dynamic control-load balancing and sharing;
- Modular and reusable signaling stack design;
- Dynamic control protocol down-loading;
- Multi-protocol (ATM, IP-over-ATM, IPSOFACTO, MPLS etc.) support at both switch and port level; and
- Generic port-resource management for supporting higher layer services like Virtual Private Network (VPN).

A conventional ATM switch contains an internal controller that is connected to one of the switch ports. When a signaling message (e.g. Q.2931 setup message) is received through a port, the corresponding line card hardware detects that the message requires control processing by looking at the corresponding VCI. At this stage, the received message is immediately forwarded to the switch controller for control processing. It should be noted that it is the switch controller that subsequently executes a relevant signaling protocol to route the connection and to set up the VPI/VCI within the relevant switch ports.

Since most of the existing switches do not handle multiple signaling protocols, the control coupling between the switch controller and the line card hardware is designed to be rigid for improved performance. A key goal of the present invention is to loosen up the coupling while maintaining standard control interfaces between the switch controller and the line card hardware. Such an approach provides a framework for implementing distributed signaling and a clean way of supporting multiple control protocols in future generation switching devices. Note that this distribution involves communication cost and practitioners ought to be careful during the implementation to keep this cost as low as possible. Otherwise the benefits of load distribution will not be seen.

### 1. Control Interfaces

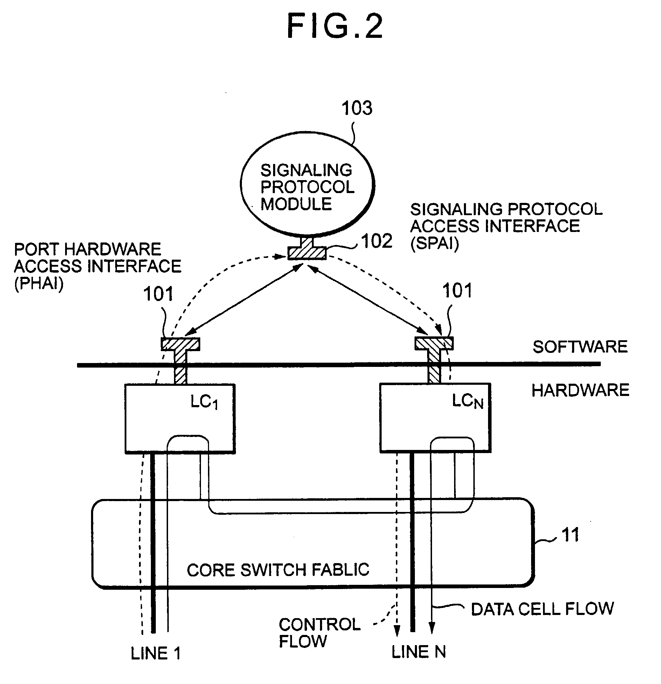

FIG. 2 shows an embodiment implementing the open control system according to the present invention. Here, the primary components of interest are a pair of standard interfaces which are termed as Port Hardware Access Interface (PHAI) 101 and Signaling Protocol Access Interface (SPAI) 102. A PHAI 101 provides access to the low-level line card resources including:
- VCI/VPI table;
- input/output buffers; and
- the cell scheduling parameters.

In addition, it is also possible to obtain the line card configuration and various traffic and error statistics information through this interface. In general, given the right access permissions, any control entity can manipulate the line card resources through the PHAI interface 101. The SPAI interface 102 implements the controller counterpart of the PHAI interface 101. Using this interface, line cards LC₁ and LC_{N} deliver control messages to a signaling protocol module 103. For the protocol module, the PHAI also serves as a general-purpose mailbox through which various asynchronous alarm events from the line cards are delivered.

Once these PHAI and SPAI interfaces 101 and 102 are specified and exported out, the physical location of the signaling module 103 becomes functionally insignificant. The signaling module 103 can run on a local switch controller 12, on a remote workstation or even on a processing element within one of the line cards. Such an implementation helps in achieving total distribution of the control processing functions. Also, since the PHAI interface 101 is specified and exported out of the line cards, it is possible for a number of different signaling protocol modules to exercise simultaneous control on different connections though a single line card. The necessary resource partitioning/management layer and its protection issues are discussed in the next subsection.

It should be noted that no assumptions are made regarding the underlying communication mechanisms used by the two interfaces PHAI 101 and SPAI 102. The communication mechanism used depends completely on the processing platform. If the switch controller (either inside or outside the switch) is connected to one of the switch ports then a default VP/VC between a specific pair of PHAI and SPAI can be used. Using such an approach, the communication cost can be kept low.

On the other hand, if the target hardware provides a dedicated control bus between the line cards and the internal switch controller(s) then using a bus-based communication mechanism will prove to be less expensive. *See* R. Dighe and V. Thirumalai; "DSLAM Functional Architecture," *NEC USA Technical Report,* January 1998. Yet in another situation, if the signaling protocol module is located in a remote computing entity then a general purpose distributed message passing mechanism like RPC will be more appropriate. See "Network Programming Guide," *Sun Microsystems,* Mountain View, CA, 1990 or ORB See S. Vinoski, "CORBA: Integrating Diverse Applications within Distributed Heterogeneous Environments", *IEEE Communications Magazine,* February 1997, pp. 46-55. In fact, in the embodiments described in the present specification, a combination of all the above-mentioned mechanism is used depending on the communication performance requirements.

### 2. Port-Resource Management Layer (PRML)

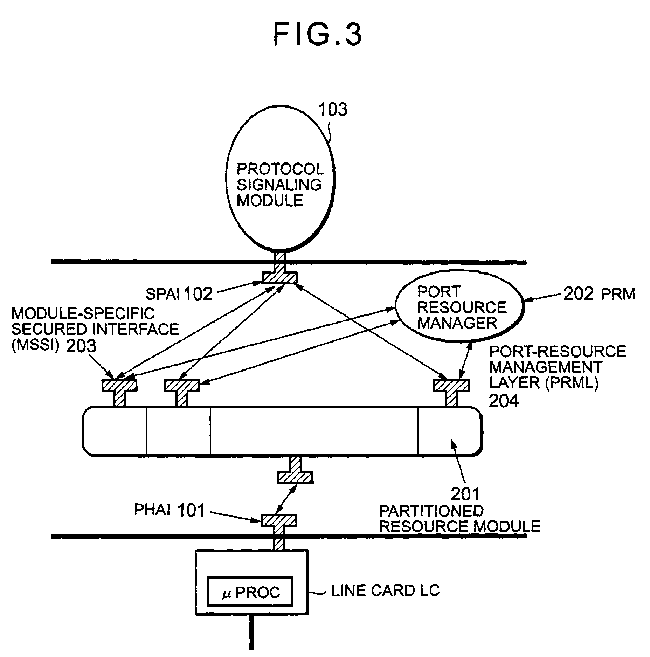

Referring to FIG. 3, a thin layer of software, namely Port-resource Management Layer (PRML) 204, is added between the PHAI interface 101 and the SPAI interface 102. Purpose of this layer is to provide a mechanism for logically partitioning the available resources and bundle them into logically consistent resource modules. Once partitioned, these resource modules are allocated to specific administrative entities which are active on the corresponding port. In addition, this layer also provides the security features needed to perform access validation of the PHAI interfaces. The port-specific resources, managed by a port PRML, are:
- switching bandwidth,
- VPI/VCI space,
- input/output buffer space and
- local processing cycles required for cell-level scheduling.

Based on a predetermined policy (static and/or dynamic), the PRML 204 partitions these resources and allocates a part of it to a partitioned resource module 201, whenever it is created. Each such resource module is owned by a specific administrative entity (e.g. a VPN) and the administrative entity is free to choose its own authentication and security model for the access to the resources. In addition, a resource module exports a Module-specific Secured Interface (MSSI) 203 which is used by the protocol signaling module 103 for controlling the partitioned resource module 201.

An MSSI interface 203 offers all the PHAI functionalities with added inter-module security and resource protection. Each resource module is identified by three parameters, namely,
- its associated port-id,
- protocol-type and
- an owner-id.
While the port-id simply refers to the physical port on which the resource module is created, the protocol-type points to a particular type of signaling protocol module which should control that particular resource module. The owner-id indicates to the administrative owner of the module and its associated resources. For example, in a virtual private network (VPN) scenario, this owner-id points to the VPN which the resource module belongs to.

Within the port-resource management layer (PRML) 204 of each port, there is a Port Resource Manager (PRM) 202 which is responsible for partitioning the available resources and allocating them to the resource modules. This entity is also responsible for creating the resource modules.

In order to explain how all the components in PRML work together, an example scenario where a physical port of a switch is shared by multiple virtual private networks (VPN) is described herein. During the creation of a VPN, the port resource manager (PRM) 202 corresponding to the port is informed, using a higher layer protocol (not explained herein), about the signaling protocol which the VPN is stated to use on that port. The port resource manager (PRM) 202 also receives information about the amount of line card resources requested by the VPN. Based on this information, the PRM 202 creates a resource module and allocates desired amount of line card resources to the newly created module. Then a resource module-to-protocol binding is established so that the resource module knows which protocol module to interact with for its control purposes.

This point onwards, a VPN resource module and its associated signaling protocol module together control and maintain the connections which come through the residing port and belong to the logical network, owned by that particular VPN. Any inter-module (inter-VPN, in this example) resource violation are trapped at this layer and appropriate corrective actions taken. Upon receiving the termination instruction from higher layer management entities, the port resource manager deletes the corresponding resource module. In this scenario, it will happen when the VPN decides to withdraw services from this particular port of the switch. Once a resource module is terminated, its occupied resources are reclaimed by the port resource manager and is used for further allocation to the future resource modules.

The present invention also provides a signaling message dispatching mechanism within the PHAI 101 of each line card. When a connection setup message is received, the line card hardware is required to deliver the message to the appropriate MSSI interface 203 using the appropriate resource module. This is done by partitioning the available *signaling* VPI/VCI space of a particular switch port. Consider a scenario where two VPNs need to run UNI/NNI signaling on a single switch port but each require independent control on their respective resource modules. This is achieved by partitioning the *signaling* VPI/VCI space for different owners. An example of this will be to use (VPI 0, VCI 5) as the signaling channel for VPN-1 and to use (VPI 0, VPI 6) as the signaling channel of VPN-2. In situations where this owner-specific VPI/VCI preassignment is not acceptable, a higher layer messaging mechanism is necessary for performing signaling message demultiplexing.

### 3. Supporting Multiple Protocols

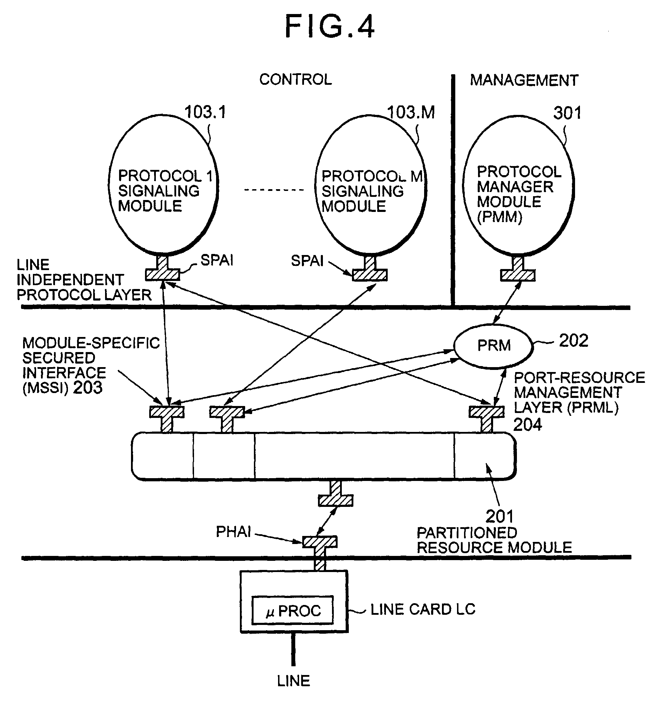

FIG. 4 shows an arrangement for supporting multiple ATM control protocols on a switch port. A list of such signaling protocols includes:
- ATM forum standard UNI/NNI;
- Distributed ATM signaling (*See* M. Veeraraghavan, T. F. La Porta and W. S. Lai, "An Alternative Approach to Call/Connection Control in Broadband Switching Systems," *IEEE Communications Magazine,* November 1995, pp. 90-95);
- Circuit Emulation (*See* D. Ginsburg. "ATM: Solutions for Enterprise networking," *Addison- Wesley,* Harlow, UK, 1996);
- IP-over-ATM (RFC 1577, 1483);
- IP-over-ATM using MPOA (*See* "Multi-Protocol Over ATM Version 1.0, AF-MPOA-0087.000," *ATM Forum,* July 1997);
- Ipsilon IP-Switching (*See* P. Newman et al, "Flow Switching: To Switch or Not to Switch," *NSF Workshop on Internet Statistics Measurements,* March 1996);
- Tag switching (*See* D. Ginsburg, "ATM: Solutions for Enterprise networking," *Addison- Wesley,* Harlow, UK, 1996);
- CSR switching (*See* D. Ginsburg, "ATM: Solutions for Enterprise networking," *Addison- Wesley,* Harlow, UK, 1996);
- Ipsofacto (*See* A. Acharya et al, "IP Switching Over Fast ATM Cell Transport (IPSOFACTO)," *Proceedings of IEEE Globecom* '97, Phoenix, Arizona, December 1997);
- IETF MPLS; and
- PCS-over-ATM (*See* S. K. Biswas and V. Thirumalai, "A Framework for PCS Service Integration within ATM Networks," *NEC USA Technical Report,* February 1998 (e.g. GSM-over-ATM)).

Note that there is no one-to-one coupling between particular protocol signaling modules 103.1 to 103.M and a partitioned resource module 201 on the port. Multiple resource modules can use a single protocol signaling module to execute their signaling requirements. The reverse however is not true; meaning a resource module is never allowed to communicate with multiple protocol modules even if their protocol types are same. By such a mechanism, it is ensured that with appropriate access authentication, multiple administrative entities on a switch-port can use the same control protocol but each of the administrative entities should be allowed to use at most one control protocol.

Whenever a partitioned resource module 201 is registered with a protocol object, it sends its own allocated resource information to the protocol module. The control protocol module uses this resource information to allocate the following to the connections, belonging to the resource module:
- VPI/VCI;
- Buffers;
- Cell-level scheduling priority; and
- to execute Call Admission Control (CAC).

Note that the protocol modules are line-independent, and no mapping between a module and its host hardware is assumed. A resource module on any port is able to use a signaling module which is running either on the same line card or on a different line card or on an internal switch controller processor or even on a remote workstation. The port resource managers are also designed to be hardware and location independent. As long as a line card implements and runs the PHAI interface 101, it should be capable of being controlled and managed by a remote PRM entity. This feature is particularly useful for switches which do not have processing capabilities on their line cards. However, for line cards with processors it is preferable to run the PRM modules locally.

At a given point of time, the switch may not necessarily have all the necessary control protocols resident locally. This calls for a dynamic protocol loading and referral arrangement, which will be explained later.

As shown in FIG. 4, each switch contains a protocol manager module (PMM) 301 which is responsible for protocol downloading, internal processing and memory resource administration and other management plane activities. Each partitioned resource module (PRM) 201 talks to the PMM 301 through a special management interface. This interface is used for informing a PRM about the necessary resource modules and their resource requirement information. The present invention does not make any assumption about the physical location of the PMM either. Depending on the available memory and processing resources the PMM can run locally on a switch controller CPU or on a remote processor situated outside the switch.

### OVERALL ARCHITECTURE

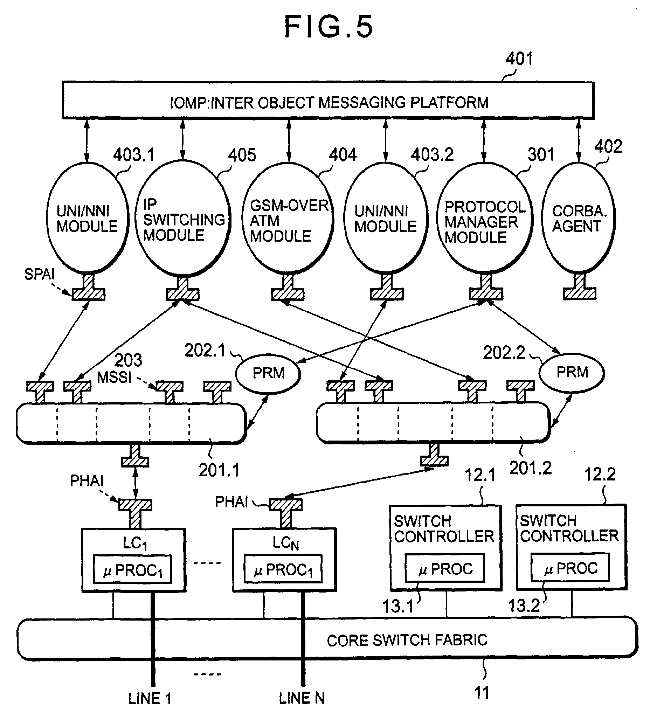

Referring to FIG. 5, the hardware architecture includes processors PROC₁ to PROC_{N} on the line cards LC₁ to LC_{N} and one or more internal control processors PROC 13.1 and PROC 13.2 on switch controllers 12.1 and 12.2, respectively. In this scenario it is most likely, and desirable, that the PRM 202 of a particular port runs locally on the corresponding line card. Some of the signaling protocol modules are also expected to run on the line cards. This hardware allocation for a software module depends on the usage load of a particular module. Because of these factors, the present invention keeps the allocation dynamic. For instance, it would be beneficial to run a UNI/NNI module on each line card processor, because each port is expected to support at least one resource module requiring UNL/NNI signaling. On the other hand, an IP-switching control module is too heavy-weight and resource intensive to run on a line card processor and should be run either on one of the local switch controllers or on a remote processor. See A. Acharya et al, "IP Switching Over Fast ATM Cell Transport (IPSOFACTO)," *Proceedings of IEEE Globecom* '97, Phoenix, Arizona, December 1997.

The present invention allows multiple instances of protocol modules of a single type to exist simultaneously. An example of such a multiple existence of port specific UNI/NNI signaling modules is shown in FIG. 5 (*See* 403.1 and 403.2). This arrangement enables the supporting of another useful mechanism, which is distributed call control processing within a switch. In a nutshell, distributed call processing allows the control, including call admission, for a new connection to be executed by multiple protocol modules residing in different processors. This mechanism, when implemented carefully, is capable of enhancing the call handling capacity of a given switching hardware.

Two new components, namely, the Inter Object Messaging Platform (IOMP) 401 and the CORBA agent 402 are shown in FIG. 5. The IOMP 401 provides a uniform inter-module communication interface within the switch. While being light-weight, this should provide a clean function-call type communication interface. For implementing IOMP 401 this embodiment uses a combination of:
- Permanent virtual circuits,
- Operating system Inter Process Communication (IPC) calls,
- Raw IP messages, and
- Remote Procedure Calls (RPC).

The CORBA agent 402 is responsible for a number of management operations including protocol downloading from the network, remote switch management and possible new service creation within the switch. *See* S. Rao, J.-P. Redlich, M. Suzuki and S. Weinstein, "A Distributed Object Architecture for QOS-Sensitive Networking," *Proceedings of OPENARCH'98,* San Francisco, CA, April 1998. The CORBA agent will be explained further.

An important design decision for this architecture is choosing an appropriate operating system. From the discussion so far it became apparent that the success of the architecture depends to some extent on the clean separations between multiple threads of protocol executions. This calls for an OS platform which is capable of supporting light-weight processes, implementing the protocol and the manager modules with their associated interfaces. Given the extent to which the present invention separates the protocol functions and map them to processes, frequent context switchings are expected. Based on this realization, a simple process structure is chosen where a process context should not contain anything substantially more than the CPU registers and a pointer to the process's stack. Considering these, a real-time embedded OS which should run on a single address space and, if necessary, should adapt itself in a multiprocessor mode is the most preferred. A list of such possible OSs includes pSOS, VxWorks, NEC RTOS and ROME embedded operating systems

### PROTOCOL DOWNLOADING AND REFERRAL

It is assumed in the present architecture that at any given point of time, all the relevant protocol modules are not necessarily resident within the switch. Instead, they are selectively down-loaded from the network, as required. The purpose of such a dynamic downloading is to optimize the utilization of the available processing and memory resources within the switch. Also, new versions of a particular control protocol can be seamlessly loaded this way, without causing any service disruption for the existing working protocols.

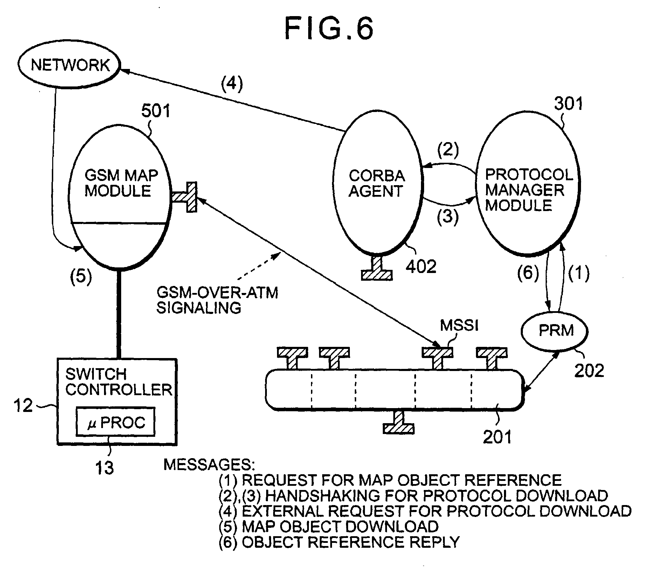

Referring to FIG. 6, there are two possible situations when an on-line protocol downloading may be invoked. The first one refers to a scenario where a port resource manager (PRM) is instructed to create a new resource module. An example of this would be when a VPN needs to be created on the specific port. At this stage, after creating a resource module and its associated MSSI, the PRM 202 sends a protocol reference request indicated by reference (1) to the switch PMM 301 as shown in FIG. 6.

If the necessary protocol module, GSM MAP in this example, is not already available within the switch, then the PMM 301, in coordination with the CORBA object 402 as indicated by references (2) and (3), downloads the GSM MAP module 501 from the network and puts it on a suitable processing platform as indicated by references (4) and (5). *See* M. Mouly and M. B. Pautet, "OSM System for Mobile Communications," *Published by the authors,* 1992. Note that the PMM 301 maintains an account of the available processing and memory resources and based on that it selects a processing platform in order to achieve the right processing load balancing.

In order to make room for a new control protocol, the PMM 301 may choose to delete a currently unused module and inform the relevant PRMs about this deletion. When local secondary storage is available, instead of deleting, the PMM 301 may also swap existing unused protocols to make room for the new ones. In the present example, after the GSM MAP module 501 is downloaded and initialized, a protocol reference reply is sent to the PRM 202 as indicated by reference (6) which, in turn, passes the reference to the corresponding MSSI interface. This point onwards, the concerned resource module directly communicates with the GSM MAP module 501 for performing all its GSM-over-ATM call processing.

The other on-line downloading scenario occurs when a new protocol is specifically requested by the user. Consider a situation where, through a meta-signaling mechanism, an end-station requests the switch for the next connection to be handled by a specific signaling protocol. An example of such a request would be the case where a user instructs the ATM network that all its web browsing traffic should use a specific IP switching protocol like IPSOFACTO. *See* A. Acharya et al, "IP Switching Over Fast ATM Cell Transport (IPSOFACTO)," *Proceedings of IEEE Globecom* '97, Phoenix, Arizona, December 1997. When the request is received by the switch and subsequently by a PMM, the PMM may realize that there is no local copy of the requisitioned control protocol in the switch. At this point, the PMM starts downloading the necessary IP switching module in the switch and also sends the necessary references to the corresponding PRMs.

### DISTRIBUTED CALL CONTROL

Call processing load balancing is achieved by distributing the protocol modules across the available processors on both the line cards and the switch controllers. Even for a single signaling protocol, the present invention allows the protocol functions to be partitioned and distributed in a modular fashion.

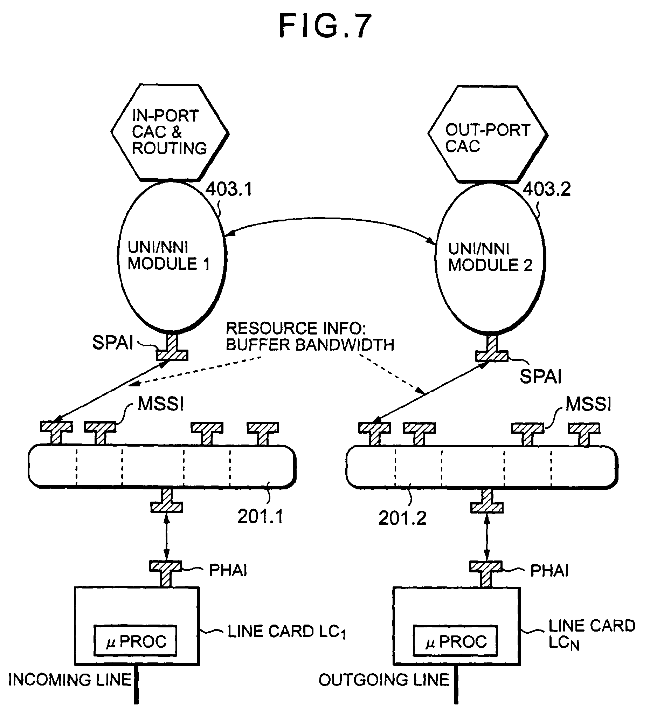

FIG. 7 shows an example of such a partitioning, where a single UNI/NNI protocol module is allocated for each of the two switch ports. When a connection request arrives through the incoming port, the message is sent to UNI/NNI module-1 403.1. The UNI/NNI module-1 403.1 then executes the call admission control (CAC) for the incoming port. A decision on CAC is made based on the requested Quality of Services (QoS) and the available buffer and CPU resources available at the incoming port. If a decision is made to admit the call, the module-1 403.1 executes routing for deciding the output port. At this stage, the module-1 403.1 contacts the relevant outgoing port UNI/NNI module-2 403.2 and the latter performs another CAC for the outgoing port. If the second CAC also succeeds, then the connection request message is forwarded to the next-hop switch. Also, the protocol modules now write a set of connection specific information within the line cards through the respective MSSI interfaces. This information includes new VPI/VCI routing entry, allocated buffer size and the cell scheduling policy. This information is sufficient to extract the QoS requirements of the newly setup connection.

It is important to note that in order for the described CAC to work, it is necessary for the protocol modules to share the resource availability information with the involved resource modules and their MSSI interfaces. A straightforward means to achieve such a sharing of information would be to have an MSSI send its allocated resource list to the protocol module as soon as it gets registered with the module. This way, the protocol module will have all the necessary information locally and a meaningful CAC decision can be made. To maintain consistency of the distributed resource databases, lazy mode update messages are used between an MSSI and its peer protocol module. In addition, a security mechanism is provided for preventing any MSSI from accessing and violating the resource information for another MSSI which is available within the same protocol module.

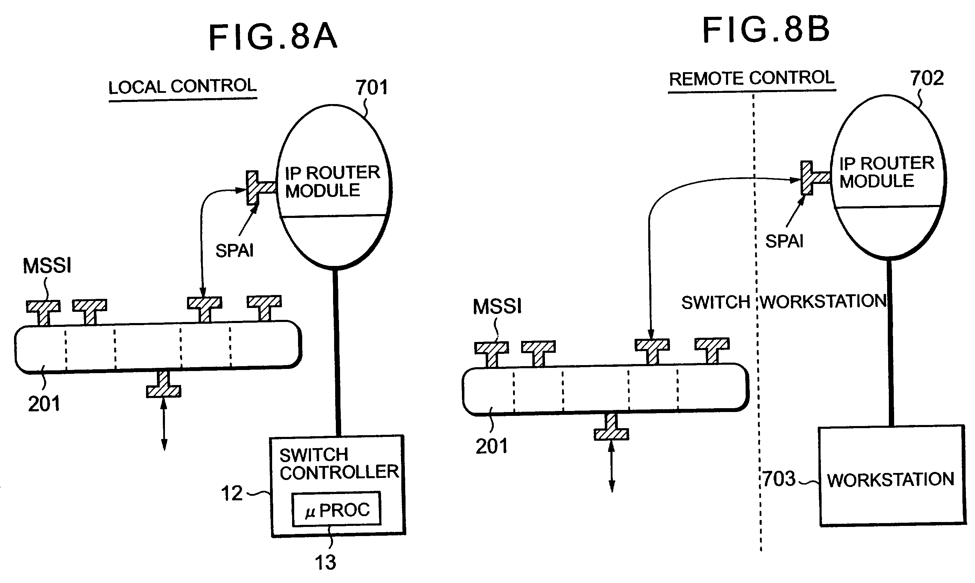

As illustrated in FIGs. 8A and 8B, the present architecture allows a mechanism for remote and transparent call control. Consider a situation where an ATM switch is operating as an IP router between two logical IP subnets (LIS in RFC 1577). The scenario as shown in FIG. 8A shows how routing can be done locally when the IP router module 701 is running on a controller card 12 within the switch. It is shown in FIG. 8B that taking the routing module 702 to a remote workstation 703 does not require any architectural change to the basic design. It is just that when the protocol referral is performed, the switch PMM should pass a remote IP router reference to the corresponding port resource manager. This level of functional transparency is achieved by using the standard MSSL and SPAI interfaces which are designed for the open control framework, as described before.

The ability to run control protocols remotely provides a switch more flexibility in terms of its local CPU usage. The idea is to run the performance critical protocols like mobile ATM locally and to distribute non real-time protocols remotely, that is when the local CPU cycles are exhausted.

### DISTRIBUTED SWITCH MANAGEMENT

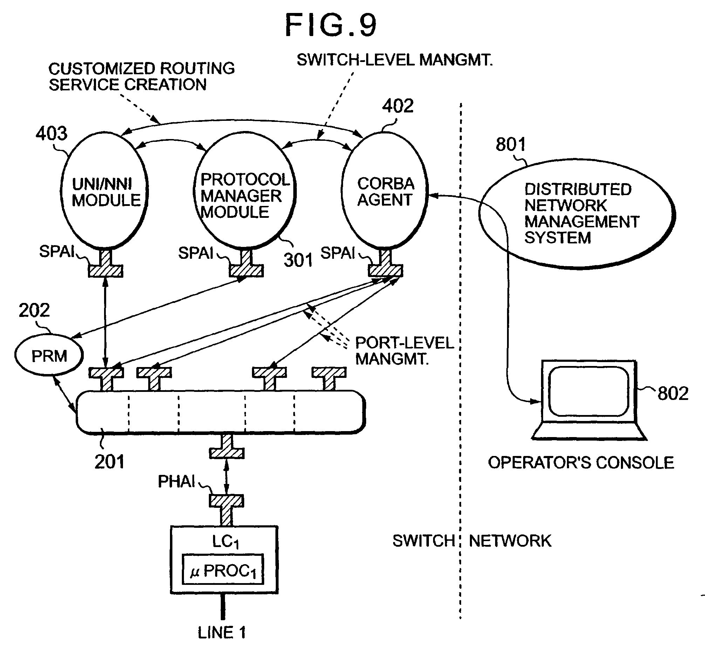

As shown in FIG. 9, a preferred embodiment for the distributed switch management according to the present invention uses a CORBA-based management framework. A CORBA module within each switch acts like a local agent that coordinates with external entities for downloading protocols and other management operations. Any remote management and control instructions for the switch are required to pass through the CORBA agent 402. In addition to providing management interfaces, such an arrangement simplifies providing security and authenticating external switch access. Note that the CORBA agent 402 also has a control interface through which it can talk to the MSSIs on all the switch ports. This provides a means for port level management. A list of such management operations include:
- Remote port configuration;
- Remote virtual private network (VPN) creation;
- Resource modules and MSSI interface creation; and
- Port statistics collection.

The CORBA agent 402 also coordinates with the protocol manager module 301 to perform switch level management functions like on-the-fly protocol downloading, billing and dynamically creating various virtual services. *See* S. Rao, J.-P. Redlich, M. Suzuki and S. Weinstein, "A Distributed Object Architecture for QOS-Sensitive Networking," *Proceedings of OPENARCH'98,* San Francisco, CA, April 1998.

Dynamic service creation, a feature of the present invention, allows on-line implementation of new services that can be customized for specific service providers and/or customers. An example of such a service is customized PNNI routing. Consider a situation where a switch is required to provide customized routing service to a specific organization where all traffic from that organization should be routed through a specific output port, irrespective of the Quality of Service (QoS) requirements and network loading conditions. Using the architecture of the present invention, it can be easily implemented on the fly. The NMS provides such an instruction to the CORBA agent 402 corresponding to the switch. The CORBA agent 402, in coordination with the local PMM 301, communicates with the relevant UNI/NNI module 403 so that the latter can modify/enhance its PNNI routing operation accordingly.

### FLEXIBLE PROGRAMMABLE ATM ACCESS MULTIPLEXER

In addition to the ATM edge switch, an NEC universal ATM multiplexer is an example of application platform that can be used for the architecture disclosed herein. *See* G. Ramamurthy, R. Fan, A. Ishi and B. Mark, "Next Generation Edge Switch Architecture," *NEC USA internal Document,* Advanced Development Department, December 1997 and R. Dighe and V. Thirumalai; "DSLA M Functional Architecture," *NEC USA Technical Report,* January 1998. The latter is used to illustrate a preferred embodiment of the present invention.

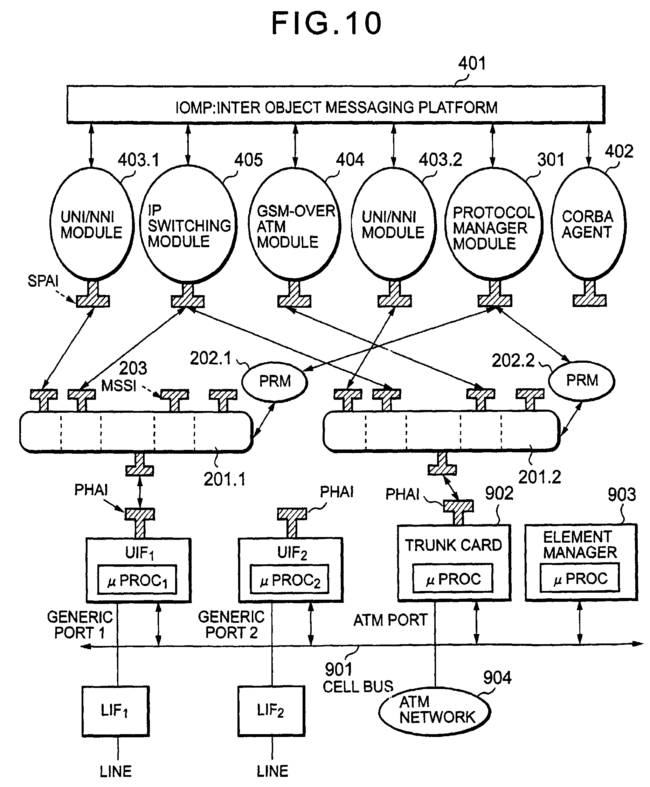

Referring to FIG. 10, an implementation of the described software architecture is shown. The implementation disclosed herein is on a Flexible Programmable ATM Access Multiplexer described in U.S. Patent Application Serial No.09/184,640, which is incorporated herein by reference, and which describes a multi-processor switching device functionally.

Each port related to the access multiplexer is divided into two physically separate cards, namely a Line Interface Card (LIF) and a Universal Interface Card (UIF). While the line interface card LIF performs all line-specific operations (e.g. coding, line delimiting, line maintenance etc.), the UIF is responsible for higher layer protocol related functions, including, layer-3 protocol termination, cell queuing, traffic shaping and policing. The UIF and LIF together provide the functionality of a switch port.

These switch-ports and the controller card (element management card) communicate through an ATM cell bus 901. An ATM cell bus 901 is chosen for optimizing the communication costs among the UIFs and the controller card. More about these cards and their functional descriptions will be described hereinafter. Note that each UIF hosts a processor and since there are multiple UIFs present in the multiplexer, the device acts like a multi-processor switch. This particular hardware feature of the multiplexer makes it a suitable implementation platform for the open control-software architecture of the present invention.

### 1. Conceptual architecture

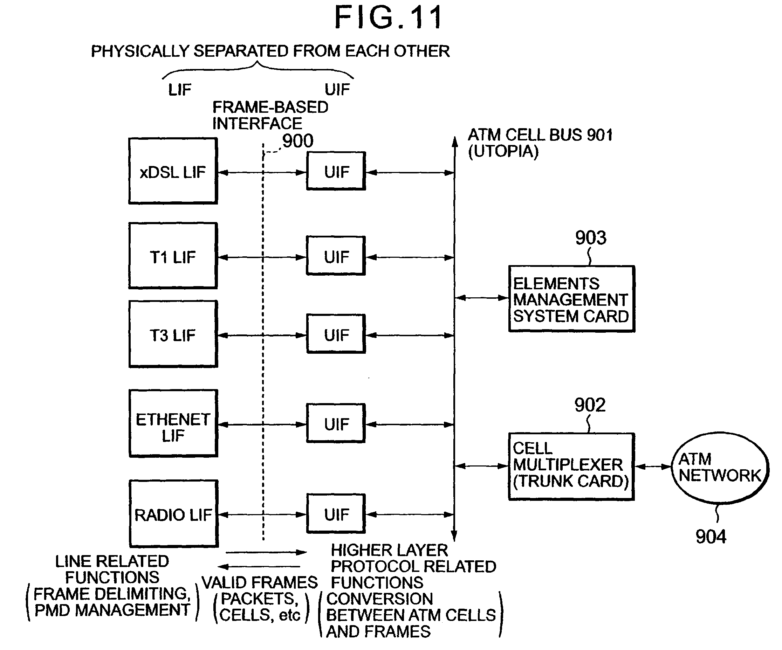

As shown in Fig. 11, the architecture of a multiplexing system based on the present invention incorporates a functional separation of line related functions and protocol related functions. Such a functional separation is accomplished by physically separating a set of line interface card (LIF) from a universal interface card (UIF) through a frame-based interface 900 that will be described later. All line related functions are done at the LIF while all higher level protocol related processing is done at the UIF.

All the UIFs are of the same type, while the structure of LIFs depend on the type of line technology used. The number of different LIFs that are provided depends on the technology available. Here, the followings may be included: T1 LIF, T3 LIF, Asymmetric Digital Subscriber Line (ADSL) LIF (CAP/DMT), HDSL LIF, ADSL-lite LIF, Ethernet LIF, Radio LIFs, 25Mb/s ATM LIF, and Cable Modem LIF. The Radio LIFs include global system for mobile communications (GSM), code division multiple access (CDMA), Wireless ATM, etc.

A skilled practitioner will understand that the present invention is not limited to the above list. LIFs based on technologies that will become available in future are also within the scope of this invention.

A common type of UIF is provided for all the LIFs. In a multiplexing operation, the LIF delimits valid frames including T1 frames, packets, cells, etc. The valid frames are then passed to the UIFs through the frame-based interface 900 such as UTOPIA (Universal Test and Operation Interface for ATM) or PCI (Peripheral Component Interconnect) interface.

All protocol processing is performed in the UIFs which converts frames to ATM cells before passing them to a cell multiplexer card 902 in the upstream direction and vice versa in the down stream direction through an ATM cell bus 901 or UTOPIA.

Similarly, in a demultiplexing operation, the cell multiplexer card 902 receives ATM cells from an ATM network and passes them to the UIF through the ATM cell bus 901. At the UIF, the received ATM cells are converted to frames and they are then passed to the LIF through the frame-based interface 900. Finally, they are converted to suit appropriate line technologies.

In Fig. 11, the respective LIFs are connected to UIFs. It should be noted that several instances of UIFs are used but they are all of the same type. The UIFs, an element manager card 903 and the cell multiplexer card 902 are connected to each other through the ATM cell bus 901. The element manager card 903 and the cell multiplexer card 902 will be described in detail later.

An advantage of this architecture is that customers can buy multiplexers without deciding the exact mix of line cards that need to be deployed. Furthermore, as the demand grows, customers can add and delete line interface cards and the system will auto-configure itself based on the changes. The mix of services being offered by such an architecture is also completely programmable and flexible. The mechanical arrangement of a platform embodying the present invention also allows for a stackable architecture allowing line interface cards and their corresponding modules to be added to the system in a modular fashion.

### 2. Physical implementation

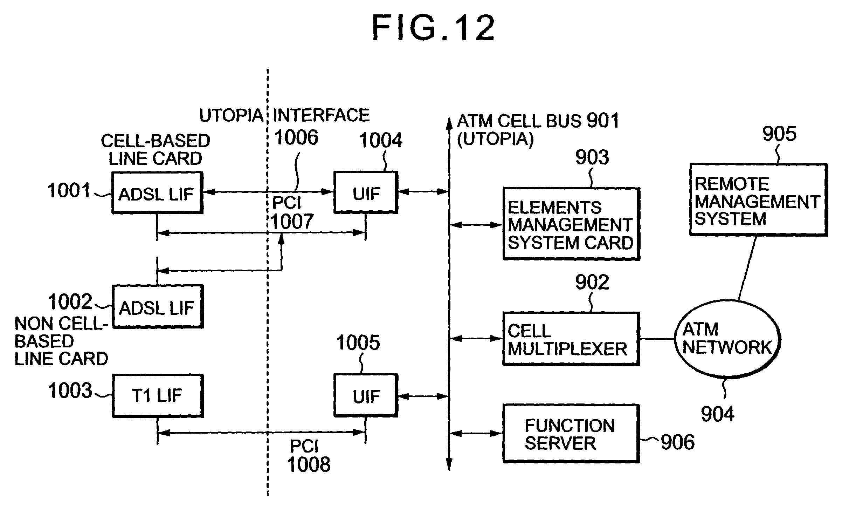

Referring to Fig. 12, for simplicity, it is assumed that a cell-based line card (ADSL LIF) 1001 and a non-cell-based line card (ADSL LIF) 1002 are connected to a UIF 1004, and a T1 LIF 1003 is connected to a UIF 1005. Recognizing the usefulness of industry standard interfaces to couple a UIF and an LIF, and recognizing that both ATM-based cells and non ATM-based data arrive at the system, the UIF is designed to have two kinds of interfaces to couple with the LIF. These are the industry standard UTOPIA interface for a cell-based line card and a PCI interface for non cell-based line cards. The PCI bus also serves as a computer for interconnecting LIF processor with UIF processors.

The cell-based ADSL LIF 1001 is connected to the UIF 1004 through both a UTOPIA interface 1006 for transfer of ATM-based cells and a PCI interface 1007 for transfer of non ATM-based data. Through the PCI interface 1007, the non-cell-based ADSL LIF 1002 is connected to the UIF 1004. The T1 LIF 1003 is connected to the UIF 1005 through a PCI interface 1008.

To use the UIF resources in this embodiment efficiently, multiple LIFs are allowed to home in on a single UIF allowing each UIF to process about 100 Mb/s of data. However, a flexible software architecture allows additional processing power on each UIF by treating the entire system as a multiprocessor system with the ability to balance processing load on a traffic driven basis.

The element management system card 903, the cell multiplexer 902, and a function server 906 are attached to the ATM cell bus 901. The cell multiplexer 902 is connected to an ATM network 904. The element management system card 903 can be remotely managed using the remote management system 905.

The PCI bus standard is augmented to provide hot-swapping capability by using the compact PCI standard with special tristate-able line drivers using the Texas Instruments LVTH family. The features of this logic family that is important for the present invention are:
- Low power consumption;
- Power-up tristate for hot insertion;
- Tristate, when not driving the bus for a lower overall load;
- Fast propagation delays; and
- Bus hold logic that eliminates the need for pull-up resistors. Such a result is achieved by having the bus receivers continue to drive the bus weakly at the same state, as the last unit to drive the bus, until it detects another driver on the bus drive it with another signal.

The flexible universal access multiplexing system is organized in a hierarchical fashion. The element management system card 903 which maintains a master copy of all databases and memory-maps communicates with the UIF CPUs through the ATM cell bus using a dedicated PVC for interprocessor communications. The UIF CPU in turn communicates with individual LIF CPUs through the PCI interface so as not to reduce the UIF performance.

The following features may be incorporated on the above platform:
1) Autoconfiguration of LIFs when they get plugged into the UIF slots;
2) Dynamic protocol downloads on the UIF on a per session basis;
3) Downloads from the ATM network 904 through the element management system card 903;
4) Remote agents invocation on LIFs and UIFs; and
5) A distributed object architecture to allow load sharing and location independent processing.

When the cell-based ADSL LIF 1001 is inserted and connected to the UIF 1004, the cell-based ADSL LIF 1001 is set to an operable state such that ATM-based cells are allowed to be transferred through the UTOPIA interface 1006 between them. When the non-cell-based ADSL LIF 1002 is inserted and connected to the UIF 1004, the non-cell-based ADSL LIF 1002 is set to an operable state such that non ATM-based data are allowed to be transferred between them through the PCI interface 1007. As described before, the PCI interface 1007 is also used as a computer bus to interconnect the processors of the LIFs 1001 and 1002 with the processor of the UIF 1004. Similarly, when the T1 LIF 1003 is inserted and connected to the UIF 1005, non ATM-based data are allowed to be transferred between them through the PCI interface 1008. The PCI interface 1008 is also used as a computer bus to interconnect the processor of the LIF 1003 with the processor of the UIF 1005. To use such a flexible universal access multiplexing system efficiently, a set of messages is used to communicate between a LIF and a UIF.

### UNIVERSAL INTERFACE CARD

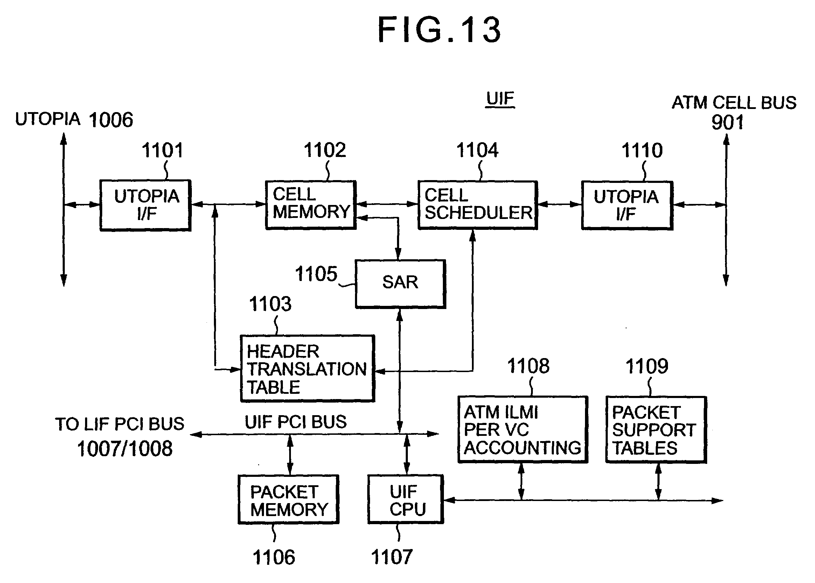

Referring to Fig. 13, the UIF is provided with a Utopia interface 1101 which can be connected to a cell-based LIF through the UTOPIA 1006. The Utopia interface 1101 is connected to a cell memory 1102 and a header translation table 1103. The UIF includes a cell scheduler 1104, a Segmentation and Reassembly (SAR) section 1105, and a packet memory 1106.

Packets received from frame-based LIFs through the PCI bus are stored in the packet memory 1106. The SAR section 1105 segments the packets stored in the packet memory 1106 into cells and stores the cells onto the cell memory 1102. Conversely, cells received from the ATM cell bus 901 are stored onto the cell memory 1102. Then, the SAR section 1105 reassembles packets from the received cells and the packets are transferred to the frame-based LIFs through the PCI bus. In the case of cell-based LIFs, outgoing and incoming cells are transferred through the Utopia interface 1101. The header translation table 1103 provides necessary information to determine the outgoing VPI/VCI for the cells coming in through the cell-based Utopia interface 1101 or through another Utopia interface 1110. These operations are controlled by a UIF CPU 1107 using Integrated Local Management Interface per VC Accounting section 808 and packet support tables 1109.

### 1. Autoconfiguration

When the LIF is plugged into the PCI slot of the UIF, the UIF autoconfigures the LIF. The UIF obtains the following information from the LIF:
1) Line Protocol on the LIF.
2) The data path, whether cell based through utopia 206 or frame based through PCI bus.
3) The protocol stack that needs to be downloaded for using this LIF. Some of the choices for the protocol stacks are:
   - Frame Relay Over ATM. *See* The Frame Relay Forum, "Frame Relay/ATM PVC Service interworking Implementation Agreement", FRF.8, April 1995; and The Frame Relay Forum, "Frame Relay/ATM PVC network interworking Implementation Agreement", FRF.5, December 1994.
   - PPP over ATM. *See* RFC 2364, PPP Over AAL5, July 1998;
   - IP over ATM (RFC 1577, 1483). *See* M.Laubach., "Classical IP and ARP Over ATM", RFC 1577, January 1994; and Heinanen.J., "Multiprotocol Interconnect Over AAL5", RFC 1483, July 1993.
   - IP over ATM using MPOA. *See* Multiprotocol Over ATM Version 1.0, The ATM Forum, July 1997;
   - IP over ATM using IP switching {Ipsilon, Tag, aggregate route based IP switching (ARIS), cell-switched routing (CSR), Ipsofacto}. *See* RFC 1953, "Ipsilon Flow Management Protocol Specification for IPv4, Version 1.0," May 1996; Y.Rekhter et al., "Cisco Systems' tag switching architecture overview," IETF RFC 2105, Feb. 1997; R.Woundy, "ARIS: Aggregate route-based IP switching," IETF Internet Draft, draft-woundy-aris-ipswitching-00.txt, Nov. 1996; Y.Katsube, K Nagami, and H Esaki, "Toshiba's router architecture extensions for ATM: Overview," IETF RFC 2098, Feb. 1997; and A. Acharya, R. Dighe, F. Ansari, "IPSOFACTO: IP switching over fast ATM cell transport," IETF Internet Draft, draft-acharya-ipsw-fast-cell-00.txt, July 1997.
   - ATM Inverse Multiplexing. *See* Inverse Multiplexing for ATM (IMA) specification version 1.0, The ATM Forum, July 1997.
   - Circuit Emulation Protocol over ATM. *See* Circuit Emulation Service Interoperability Specification Version 2.0, The ATM Forum, January 1997.
   - Native ATM. *See* Native ATM Services: Semantic Description Version 1.0, The ATM Forum, February 1996.
   - VTOA. *See* Voice and Telephony Over ATM- ATM Trunking using AAL1 for Narrowband Services version 1.0, The ATM Forum, July 1997
   - Radio Technologies such as GSM over ATM

There are two different scenarios for the automatically downloading protocol on the UIF.
1. There is no signaling channel between the LIF and the customer premises equipment (CPE).
2. There exists a signaling channel between the LIF and the CPE.

It is to be noted that the signaling referred to here is not the traditional signaling associated with call setup and teardown but signaling related to associating a protocol stack with a given ATM VC.

In the first case, it is assumed that a higher entity (like an NMS or a service order) has already stored protocol stack information on a per channel basis which can be used by the UIF for customizing protocol stacks on a per session basis. Note that higher level agents using languages like CORBA (Common Object Request Broker Architecture) are also able to make the changes needed to the UIF configuration registers through the element management system card 903.

In the second case, the signaling mechanism can be explicit or implicit. In explicit signaling, a well-know channel on the LIF/CPE link carries these messages while in the implicit case, channels (VCs/DLCIs/Slots) are partitioned to different protocol stacks. This channel partitioning is negotiated using Hello messages between the LIF and the CPE. If the signaling is explicit, a signaling channel is specified on the link between the CPE and the LIF. If the link supports ATM, then a PVC is used to carry the protocol specific information between the CPE and the Mutiplexer. The signaling PVC that is to carry user network interface (UNI) signaling (VP=0, VC=5), specifically the codeset 7 (User Specific IEs), can be used to indicate a nonstandard signaling message.

A similar signaling channel can also be caned out of a T1 link by using the robbed bit signaling channel or a FR PVC or the D channel on a PRI and using the user specific PID. The signaling message carries information on the protocol to be used and will carry a protocol id field in it. The LIF needs to store the signaling messages in a specific address location on its packet memory and inform the UIF about the location when it is plugged in.

In the case that the link between the LIF/CPE actually has a standard signaling channel (ISDN, FR, Robbed bit, ATM UNI), the signaling message is extracted by the LIF and passed to the UIF using the aforementioned signaling location. The UIF terminates the signaling and transmission down the network based on the protocol stack that is relevant for the VC.

### 2. ATM Cell Level Functions

The UIF performs all the ATM level functions. This includes cell scheduling as well as per VC queuing performed by the cell scheduler 1104. Multiclass support is assumed so the UIF terminates available bit rate (ABR) and processes resource management (RM) cells. Scheduling algorithms such as weighted round robin or strict priority or deadline scheduling is programmable. Packet level support performed by the Packet Support Tables 1109 includes per flow queuing as well as various packet discard schemes {early packet discard (EPD), partial packet discard (PPD), random early discard (RED)}.

Shaping and policing functions are also performed. VC merge is an optional feature that needs hardware support for packet based scheduling. The SAR functions will also provide multi AAL support (AAL5, AAL1 and AAL2) for the different application types. This information needs to be provided on a per VC basis during the autoconfiguration stage or can be updated as VCs are set up on a call by call basis.

### 3. Higher Level Functions

The protocol stacks listed above is supported on the UIF in a modular downloadable fashion. The entire ATM signaling stack (UNI 4.0, PNNI 1.0) is downloaded on the UIF if needed. The IP protocol stack {internet gateway management protocol (ICMP), resource reservation protocol (RSVP), border gateway protocol (BGP), open switch path first (OSPF), RIP, distance vector multicast routing (DVMRP) etc.} is downloaded on the UIF CPU 1107 or kept on a separate function server card 906. A modest size IP table look up cache 1109 is maintained on the UIF CPU 1107. Flow id tables can be carved out from the system memory if IP switching schemes based protocol stacks are being used on a given UIF. The L3/L2 binding hardware is supported on the UIF. This takes a L3 address and pops out a L2 VC for that given address. The same hardware could be used for MPOA and other IP switching schemes. Based on the MPLS requirements, a 20-bit lookup table may be needed on the UIF.

### 4. Higher Level Remote Agents

The UIF is also expected to support remote Jave/Corba agents from remote agents. The typical functions that these agents need to perform are:
- Filtering Operations.
- Security Operations including encryption and decryption.
- Collecting Billing Data.
- Packing a specific VC to start a debug trace.
- Invoking a specific mobility support algorithms such as hand off support and location management.

### 5. Database Support

The UIF maintains a copy of the interim link management interface (ILMI) and the ATMMIB database 1108. Other database support for IP switching schemes is also supported. The UIF allows both simple network management protocol (SNMP) and common management information protocol (CMIP) agents to query these databases.

### ELEMENTS MANAGEMENT SYSTEM CARD

The elements management system card 903 is the master controller of the universal access multiplexer. A CORBA ORB will resides on this card. This card communicates with the UIFs using ATM PVCs. It also has CORBA-based PVC setup with remote network servers and databases. The elements management system (EMS) is expected to be carrier-ready and needs to support TMN interfaces to Operation Support Systems. It needs an X.25 interface to provide support for SS7 (Signaling System 7)-based systems.

### OPERATION

For using the flexible universal access multiplexing system as described above efficiently, a set of messages is required. An example of message communications sequence will be described hereinafter.

When a LIF is plugged into a UIF, the LIF makes a registration request to the elements management system (EMS) card 903. When the LIF has been registered in the EMS card 903, a registration response is sent back to the LIF.

When receiving the registration response from the EMS card 903, the LIF makes a registration request to the UIF using a Hello message as will be described later. The UIF determines whether the connected LIF is acceptable or not in response to the registration request and sends the result (accept or reject) to the LIF. If the LIF is acceptable, the UIF sends the LIF a configuration message conveying the correct configuration files to support the LIF, which have been downloaded from the EMS card 103.

On successful completion of the configuration, the LIF sends a configuration success/failure message back to the UIF. After the channel activation has been successfully completed and established the link with the remote CPE, the UIF identifies the remote CPE using line stabilization, identify remote and identify remote acknowledgement messages as will be described later and then sends a loopback message to the LIF. The loopback message causes the LIF to set up the loopback test. The LIF sends an acknowledgement of the loopback message to the UIF and starts measurement. The collected statistics are sent by the LIF to the UIF in response to the request of the UIF. The statistics are reported to the UIF at predetermined intervals (here, every 1 second).

### DISTRIBUTED CALL PROCESSING

The present invention provides a software architecture for implementing open call control in multiprocessor ATM switches. By implementing a set of well-defined control interfaces at the switch ports and at the signaling protocol objects the call processing load is distributed within as well as outside the switch hardware. The present invention also provides a distributed processing framework which can be used for simultaneous implementation of multiple signaling protocols within a switch. Multiple protocols are supported both at the port level and at the switch level. The architecture also supports dynamic protocol downloading which is useful when a switch does not require to pre-load all possible signaling protocols at boot time. Instead, it can download the necessary call-control modules on-the-fly, as required. This mechanism helps the processing and memory resources in the DSLAM switch to be utilized in an efficient manner. Finally, how the present architecture can work with a distributed network management system and is able to implement hierarchical switch management along with dynamic service creations is illustrated.

Other modifications and variations to the invention will be apparent to those skilled in the art from the foregoing disclosure and teachings. Thus, while only certain embodiments of the invention have been specifically described herein, it will be apparent that numerous modifications may be made thereto without departing from the spirit and scope of the invention. Further, acronyms are used merely to enhance the readability of the specification and claims. It should be noted that these acronyms are not intended to lessen the generality of the terms used and they should not be construed to restrict the scope of the claims to the embodiments described herein.

### RESOURCE AND PROTOCOL MANAGEMENT FOR VPNs

The present invention is partially based on a network-control paradigm in which a VPN owner is allowed to run multiple control/signaling protocols within its own VPN. Support of such a multiprotocol control is an important feature of this invention. It allows different connections (belonging to a single VPN) on a single switch port to be controlled by different control protocols.

This design can be implemented on an ATM open-control framework which is described above. The architecture provides a bottom-up mechanism for supporting resource partition and reservation within multiprocessor switching devices. The architecture also has a clean mechanism for incorporating multiple control protocols on a switch port. A key aspect is the use of the port-resource management layer of the architecture for implementing VPN resource and protocol management functions.

There are several key features that form the core of the present invention. According to the present invention, line-resources within the network are partitioned to provide VPN support. Further resources for switch processing functions are also partitioned for VPN support. The present invention also provides for mechanisms for reserving resources for individual VPNs. Multiple control protocols can be configured on a single switch port. Mechanisms are provided for assigning control protocols to the VPNs. Another key aspect of the invention is the provision of management support for VPN service creation and deletion.

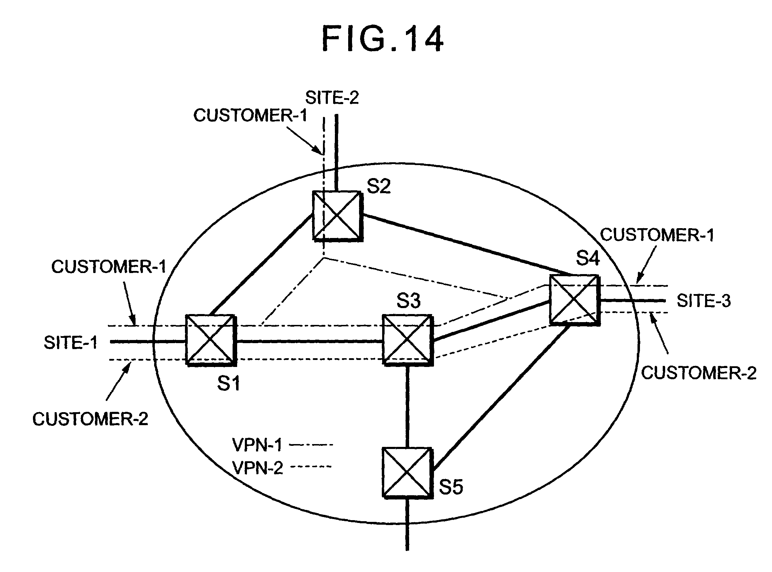

As shown in FIG. 14, an overlay model forms the basis of the present embodiment. In this model two VPNs are created on an ATM network with five switches and eight links. The bold lines represent physical ATM links. VPN-1, spanning through switches S1, S2, S3 and S4, is allocated to customer-1. This customer is present at site-1, site-2 and site-3. Similarly, VPN-2, which spans through S1, S3 and S4, is assigned to customer-2, who has presence at site-1 and site-3. Note that this VPN model allows a single customer to be present at more than one sites. The presence of a customer at more than one site makes it particularly suitable for corporate customers who require customized network services among multiple sites that are geographically apart. Note that in the overlay framework that is described, an ATM switch can be shared by multiple VPNs both at the switch level and at the port level. For example, the switch S1 is shared by both the VPNs. Further, two of its ports (port connecting site-1 and port connecting switch S3) are shared by the VPNs. Such a sharing requires resource partitioning, reservation and management mechanism to be in place within the switch. The present invention specifically provides an architectural framework for both line and processor resource management for VPNs, acting on ATM switches.

Once a VPN is created, its owner customer can use either PVCs or SVCs (Switched Virtual Circuit) within the VPN. In case SVCs are chosen, the customer can also choose its own signaling protocol, e.g. Distributed ATM signaling or UNNI/PNNI, for connection setup and other ATM control-plane operations. *See* M. Veeraraghavan, T. F. La Porta and W. S. Lai, "An Alternative Approach to Call/Connection Control in Broadband Switching Systems," *IEEE Communications Magazine,* November 1995, pp. 90-95; "ATM User Network Interface (UNI) Specification Version 4.0, AF-SIG-0061.000," *ATM Forum,* July 1996; and "Private Network-Network Interface Specification version 1.0, AF-PNNI-0055.000," *ATM Forum,* September 1996). If the customer wants to support packet based services like IP within the VPN, it is free to choose a specific Packet-based control protocol.

It should be emphasized that, once configured appropriately, a VPN customer can choose any signaling/control protocol without affecting the other VPNs that are sharing the same ATM links and switches. For example, in FIG.14, customer-1 and customer-2 can use completely different signaling protocols for setting up SVCs within VPN-1 and VPN-2. Because of such a sharing, in addition to appropriately reserving resources and partitioning, the participating ATM switches are required to support multiple control protocols on the same switch port.

In the next level of multiprotocol support, the present invention allows a single VPN to use multiple signaling/control protocols over a switch port. In such a scenario, different sessions within the same VPN can use different control protocols based on their specific performance requirements. This can be better explained with an example. Consider that customer-1 in FIG.14 has a machine connected to VPN- 1 in site-1. For an IP-Telephony session on that machine, the end-application might prefer to use a control protocol like IF-over-ATM using MPOA. *See* "Multi-Protocol Over ATM Version 1.0, AF-MPOA-0087.000," *ATM Forum,* July 1997. However, for World Wide Web (WWW) traffic from the same machine, the web applications might prefer an IP switching protocol like Ipsilon IP-Switching. *See* P. Newman et al, "Flow Switching: To Switch or Not to Switch," *NSF Workshop on Internet Statistics Measurements,* March 1996. In this situation, VPN-1 needs to support both MPOA and Ipsilon protocol stacks on the port (corresponding to switch S1) which is connected to site-1. The choice of different control protocols is based solely on the application performance requirements. The VPN resource management and protocol support architecture of the present invention allows this level of multiple protocol support within a single VPN.

The architecture of the present invention also provides the necessary management functions for creating and terminating the VPNs dynamically. This involves creating and destroying resource modules within the switch ports. This invention, working with an open control architecture described in provides all the switch level functions which are required for supporting the presented VPN model.

### 1. Port Resource Management for Supporting VPNs

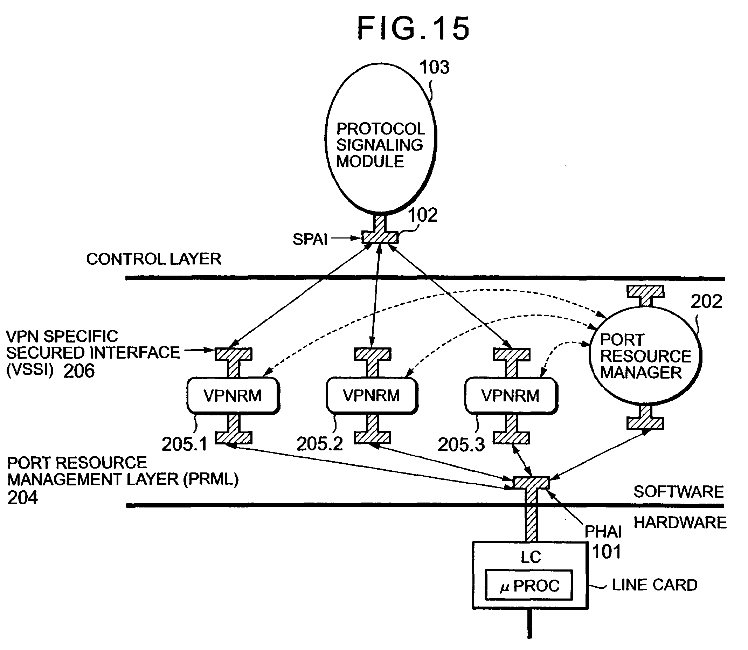

As shown in FIG. 15, an embodiment provides a mechanism for VPN-specific partitioning of the switch port resources. A layer of software, namely the Port-resource Management Layer (PRML) 204, is provided between a line card LC and the signaling protocol 103 which controls the line card.

The software interface PHAI (Port Hardware Access Interface) 101 is used for providing access to the low-level line card resources including VCI/VPI table, input/output buffers and the cell scheduling parameters. In addition, it is also possible to obtain the line card configuration and various traffic and error statistics information through this interface 101. In general, given the right access permissions, any control entity can manipulate the line card resources through the PHAI interface 101. A similar interface SPAI (Signaling Protocol Access Interface) 102 implements the controller counterpart of PHAI. Using this interface 102, a line card delivers control messages to the signaling protocol module 103. For the protocol module, it also serves as a general-purpose mailbox through which various asynchronous alarm events from the line cards are delivered. These two interfaces together, implement the basis for an Open Control paradigm within the ATM switch, as described before.

The Port-resource Management Layer (PRML) 204 provides a mechanism for logically partitioning the available resources and bundling them into VPN specific Resource Modules or VPNRMs 205.1 to 205.3. Once partitioned, these resource modules are allocated to specific VPNs which are active on the port in question. The port-specific resources managed by the PRML are switching bandwidth, VPI/VCI space, input/output buffer space and local processing cycles required for cell-level scheduling.

Based on a pre-defined policy (static and/or dynamic), the PRML partitions these resources and allocates a part of it to a VPNRM, whenever the VPNRM is created. Each VPNRM is owned by a specific VPN and the owner VPN is free to choose its own authentication and security model for the access to the corresponding resources. In addition, a VPNRM exports a VPN-specific Secured Interface (VSSI) 206 which is used by the protocol signaling module 103 for controlling the partitioned resources, owned by a VPN. A VSSI interface offers all the PHAI functionalities with added inter-module security and resource protection as described before.

Each VPNRM is identified by three parameters, namely, its associated port-id, protocol-type and aVPN-id. While the port-id simply refers to the physical port on which the resource module is created, the protocol-type points to a particular type of signaling protocol module that should control that particular VPNRM. The VPN-id indicates the identification of the VPN itself. Within the port-resource management layer (PRML) 204 corresponding to each port, there is a Port Resource Manager (PRM) 202 which is responsible for partitioning the available resources and allocating them to the VPNRMs. The PRM 202 is also responsible for creating, deleting and managing the resource modules.

How all the components of the PRML 204 cooperate is described herein. During the creation of a VPN, the port resource manager 202 corresponding to the port is informed about the signaling protocol which the VPN needs to use on that port. The port resource manager 202 also receives information about the amount of line card resources requested by the VPN. Based on this information, the PRM 202 creates a resource module and allocates the desired amount of line card resources to the newly created module. Then a resource module-to-protocol binding is established so that the resource module knows which protocol module to interact with for its control purposes.

This point onwards, a VPNRM and its associated signaling protocol module, together control and maintain the connections which arrive through the residing port and belong to the logical network, owned by that particular VPN. Inter-VPNRM resource violations are trapped at this layer and appropriate corrective actions are taken. Upon receiving the termination instruction from higher layer management entities, the port resource manager deletes the corresponding VPNRMs. In this scenario, such a termination request happens when the VPN decides to withdraw services from this particular port of the switch. Once a resource module is terminated, its resources are reclaimed by the port resource manager and are used for reallocation to VPNRMs to be created in future.

### 2. Multiprotocol Implementation

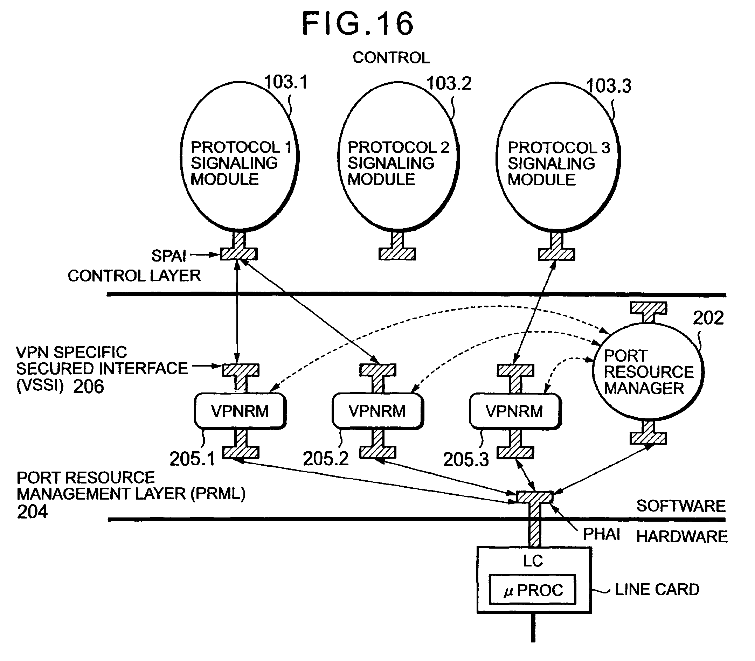

As shown in FIG. 16, the VPN resource management layer can support multiple protocols. A list of supported signaling protocols is the same as the list described in FIG. 4.

There is no one-to-one coupling between a particular signaling protocol module and a VPNRM on the port. Multiple VPNRMs can use a single protocol module to execute their signaling requirements. The reverse however is not true; meaning a VPNRM is never allowed to communicate with multiple protocol modules even if their protocol types are same. Since different VPNRMs can be controlled by different signaling protocols, the first signaling requirement of the VPN model is satisfied within this architecture. That is, each VPN can choose its own control protocol without affecting the operations of the other VPNs operating on the same switch port.

The second requirement of the VPN model is to let a VPN use multiple control protocols on the same switch port. To incorporate this, a single VPN can create multiple VPNRMs on the same switch port, depending on its control protocol requirements. Assume that a VPN needs to support both MPOA and Ipsilon IP-Switching protocols on the same switch port. This can be achieved by creating two VPNRMs and associating one with an MPOA protocol signaling module and the other with an IF-Switching module. Whenever a VPNRM gets registered with a protocol object, it sends its own allocated resource information to the protocol module. The control protocol module uses this resource information to allocate several items to the connections, belonging to the resource module, including VPI/VCI, Buffers, Cell-level scheduling priority and Call Admission Control (CAC).

The above mechanism assures the protection of inter-VPNRM resources when multiple VPNRMs are controlled by a single signal protocol module.

In order for this multiprotocol VPN framework to work, a clean mechanism for demultiplexing signaling messages at the line card hardware level is required. When a connection setup message is received, the line card hardware is required to deliver the message to the appropriate VSSI interface. This is done through the appropriate VPNRM. First a decision needs to be made regarding which VPN this signaling message belongs to. Then a specific VPNRM should be chosen, based on specific control requirement.

The first level of demultiplexing is done by partitioning the available *signaling* VPI/VCI space of a particular switch pod. Consider a scenario where two VPNs need to run UNI/NNI signaling on a single switch port but each require independent control on their respective VPNRMs. This is achieved by partitioning the *signaling* VPI/VCI space for different owners. An example of this would be the use VPI 0, VCI 5 as the signaling channel for VPN-1 and the use of VPI 0, VCI 6 as the signaling channel for VPN-2. This partition information is conveyed to the switches during the configuration of the VPNs during their creation. The second level of demultiplexing, that is the selection of a specific VPNRM within the chosen VPN, is performed by using additional information within the control message itself. The present invention uses additional Information Elements (IE) within the signaling/control message for encoding the specific control protocol requirements. This information, together with the *signaling* VPI/VCI space partition, is used for dispatching an incoming signaling message to its corresponding appropriate VPNRM.

### VPN ON UNIVERSAL ATM ACCESS MULTIPLEXERS

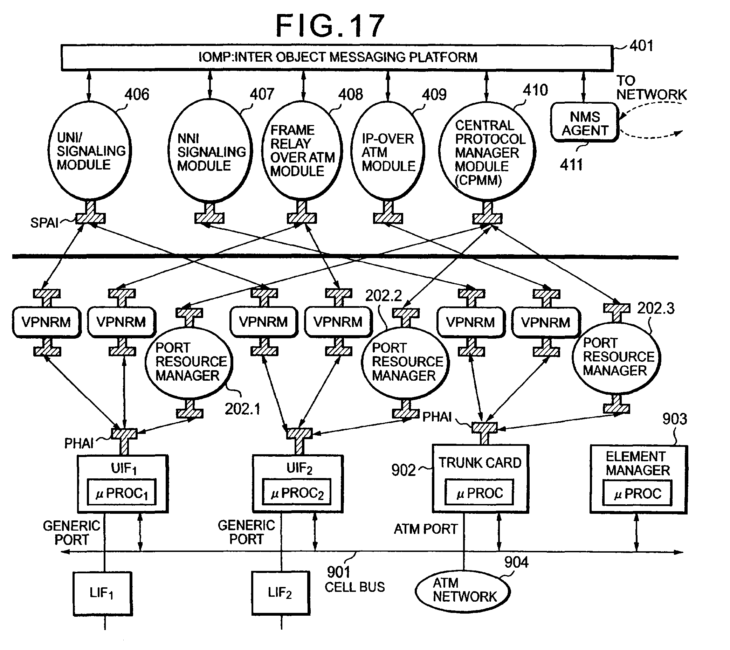

FIG. 17 depicts an integrated picture of all the necessary software components, running on multiple ports of the access multiplexer which has the same hardware configuration as shown in FIG. 10. The descriptions thereof will be omitted with the similar circuit blocks labeled the same reference numerals.

Three new software components, namely, a Central Protocol Manager Module (CPMM) 410, an Inter Object Messaging Platform (IOMP) 401 and an NMS agent 411 are shown in Fig. 17. Each ATM Multiplexer contains a CPMM 410 which is responsible for protocol downloading, internal processing and memory resource administration and other protocol related management activities. Each PRM 202 talks to the CPMM 410 through a special management interface. This interface is used for notifying a PRM about the necessary VPNRMs and their resource requirement information. The IOMP 401 provides a uniform inter-module communication interface within the ATM Multiplexer. This provides a clean function-call type communication interface. For implementing IOMP, a combination of permanent virtual circuits, operating system Inter Process Communication (IPC) calls, raw IP messages and Remote Procedure Calls (RPC) are used.

The NMS agent 411 runs within the element manager card 903 and communicates with a designated NMS manager which resides within the network 904. The role of NMS agent 411 is to coordinate local network management operations including VPN management, protocol downloading, device configuration, resource configuration, measurement and billing. More about VPN management by NMS agent is discussed in the next section.

### VPN Management

Another aspect of the present invention is a switch resource and protocol management architecture for supporting Virtual Private Networks. Previous sections of this documents describe various components of the architecture and their interworking within a switching device. In this section, a mechanism for an external entity like a Network Management System (NMS) to create and configure the VPN support components within the switch is provided.

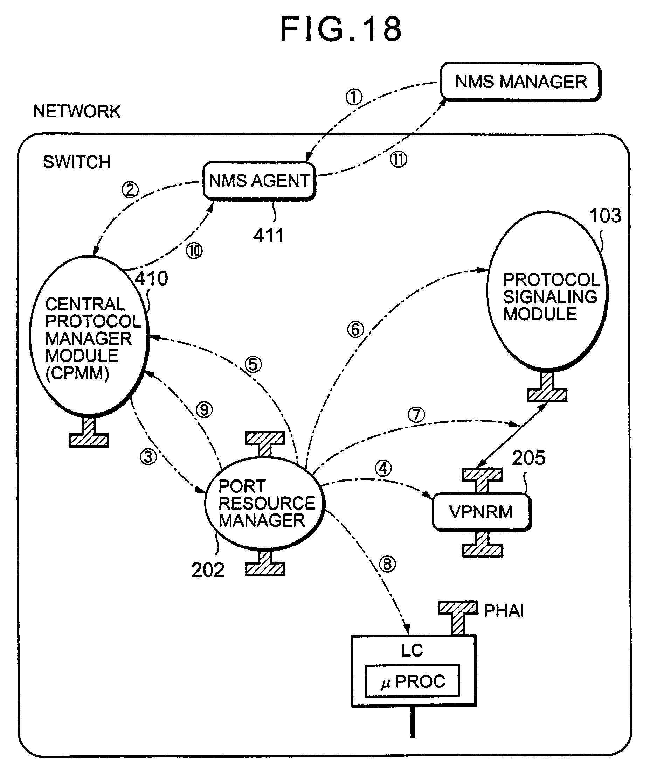

As shown in FIG. 18, the process of VPN creation/configuration is described as a sequence diagram. The circled numbers attached to each dotted arrow indicates the sequence of that operation. Note that the step number in the following description corresponds to the operation sequence number in the diagram. It is to be noted that all the internal communication is performed using the IOMP mechanism, described earlier.
1. An NMS manager 905 instructs the switch NMS agent 411 to create a VPN. This instruction comes with various VPN specific information, including VPN owner id., participating switch ports, duration of the VPN and required signaling/control protocols on each port. Usually, this process is triggered when a customer needs to create a VPN and contacts the NMS with its specific requirements. Note that a similar request can also be originated for reconfiguring/modifying an existing VPN.
2. The NMS agent 411 performs the authentication validation of the request and forwards it to the Central Protocol Manager Module (CPMM) 410. At this stage, the CPMM 410 processes the request and decides which ports are required to be configured by the VPN.
3. The CPMM 410 sends configuration requests to all the Port Resource Managers (PRMs) 202 of the involved ports. For simplicity, transaction with only one port is shown in the FIG. 18. However in reality, similar transaction is carried out between the CPMM 410 and all the appropriate PRMs. Detailed resource and protocol requirements are sent to the PRMs at this stage.
4. The PRM 202 creates and configures required VPNRMs 205 with specified amount of resources reserved for them. If a sufficient amount of resources is not available, then the PRM 202 generates a fault message back to the CPMM 410 which is finally relayed back to the appropriate customer through the network management system.
5. The PRM 202 communicates with the CPMM 410 to get a reference for the desired control protocol module within the switch. The CPMM 410 maintains a database of all such locally resident control modules. If the desired module is not available, then the CPMM 410 downloads the required signaling module from the network. The download process is designed as described before. At this stage, the CPMM 410 provides the PRM 202 with a reference to the desired control protocol module.
6. The PRM 202 passes the VPNRM configuration information to the necessary protocol signaling module 103.
7. A binding is created between a VPNRM 205 and its control protocol signaling module 103.
   Although the figure shows only one such instance, this operation is performed for all the created VPNRMs and their designated protocol signaling modules.
8. Control message demultiplexing information is sent to the switch line card. This information is used at the PHAI interface level for dispatching an incoming control message to the appropriate VPNRM.
9. Success or failure of the process is sent back to the CPMM 410.
10. Information conveyed in the step indicated by the reference numeral 9 is sent back to the NMS agent 411.
11. Information conveyed in the step indicated by the reference numeral 10 is sent back to the NMS manager 905 which, in turn, informs the initiating customer about the result of thc VPN set up process.

Note that this architecture is capable of executing this entire process dynamically and that is without affecting the operations of the existing VPNs which were already configured on the switch.

Other modifications and variations to the invention will be apparent to those skilled in the art from the foregoing disclosure and teachings. Thus, while only certain embodiments of the invention have been specifically described herein, it will be apparent that numerous modifications may be made thereto without departing from the spirit and scope of the invention.

Further, acronyms are used merely to enhance the readability of the specification and claims. It should be noted that these acronyms are not intended to lessen the generality of the terms used and they should not be construed to restrict the scope of the claims to the embodiments described herein.

## Claims

1. An open control system for an ATM network including a plurality of ATM switches, characterized by:
a port hardware access interface (PHAI) providing access to line card resources; and
a signaling protocol access interface (SPAI) which is connected to a signaling protocol module and implements switch controller functionality,
wherein the PHAI and the SPAI communicate with each other using at least one mechanism depending on a processing platform used.

2. The open control system according to claim 1, further comprising a port resource manager layer (PRML) between the PHAI and the SPAI, for logically partitioning available resources and bundling the available resources into logically consistent resource modules.

3. The open control system according to claim 2, wherein the available resources includes switching bandwidth, VPI space, VCI space, input buffer space, output buffer space and local processing cycles for cell-level scheduling.

4. The open control system according to claim 2 or 3, wherein the PRML partitions the available resources based on one of a static and/or dynamic policy into a plurality of partitioned resource modules, wherein each of the plurality of partitioned resource modules is assigned to a specific administrative entity.

5. The open control system according to claim 4, wherein each of the plurality of partitioned resource modules exports a module specific secured interface (MSSI) that is used by a protocol signaling module for controlling the plurality of partitioned resource modules.

6. The open control system according to claim 4, wherein partitioning the available resources is done by a port resource manager (PRM), wherein the PRM receives information about the signaling protocol that will be used by a newly created administrative entity on a specific port and an amount of line card resources required by the administrative entity, wherein based on received information the PRM creates a partitioned resource module and allocates a desired amount of resources to the newly created administrative entity.

7. The open control system according to claim 4, wherein the partitioned resource modules are further coupled with at least one signaling protocol module, the signaling protocol module being line independent to provide location transparency, wherein associations are created between said partitioned resource modules and said one or more of signaling modules such that multiple partitioned resource modules can be associated with a single signaling module but multiple signaling modules can not be associated with a single partitioned resource module, wherein said coupling is provided to execute signaling requirements.

8. The open control system according to claim 5, wherein a signaling message dispatching mechanism is provided within the PHAI, wherein when a line card corresponding to the PHAI receives a connection setup message, the connection setup message is delivered to the corresponding MSSI through the corresponding partitioned resource module by partitioning an available VPI space and VCI space of a corresponding port.

9. The open control system according to claim 6, further comprising a protocol manager module (PMM) for each switch, wherein the PMM is responsible for protocol downloading, internal processing, and memory resource administration and management plane activities.

10. The open control system according to claim 7, wherein the at least one signaling module communicates with an inter object messaging platform (IOMP), wherein the IOMP provides a uniform communication interface between said at least one signaling module.

11. The open control system according to claim 9, wherein the PMM communicates with the PRM through a special management interface, wherein the management interface is used for indicating to the PRM the necessary resource modules and the corresponding resource requirements.

12. The open control system according to claim 2, wherein the PRML provides a mechanism for logically partitioning available resources and bundling a partitioned resource into VPN (virtual private network) specific resource module (VPNRM), the VPNRMs being allocated to at least one VPN which is overlaid on the ATM network.

13. The open control system according to claim 12, wherein each of the VPNRMs is owned by one of the VPNs and the one of the VPNs is free to choose an authentication and security model for accessing available resources.

14. The open control system according to claim 12, wherein each of the VPNRMs exports a VPN-specific secured interface (VSSI), the VSSI being used by a protocol signaling module for controlling partitioned resources owned by a VPN.

15. The open control system according to claim 12, wherein each of the at least one VPN is capable of using multiple control protocols on a same switch by creating a VPNRM each for each of the multiple control protocols.

16. The open control system according to claim 12, wherein each of the at least one VPN uses an independent control protocol on a switch by creating a VPNRM for the independent control protocol.

17. The open control system according to claim 12, wherein each of the VPNRMs is registered with a protocol object by sending an allocated resource information corresponding to the VPNRM to a protocol module, wherein the protocol module uses the resource information to allocate resources.

18. The open control system according to claim 12, wherein when a connection setup message is received, a line card hardware delivers the connection setup message to an appropriate VSSI interface through an appropriate VPNRM, the appropriate VPNRM being chosen based on a specific control requirement corresponding to a VPN associated with the connection setup message.

19. The open control system according to claim 18, wherein a VPNRM is chosen by partitioning an available VPI space and VCI space of a switch port and selecting a VPNRM within the VPN associated with the message using additional information within the message itself.

20. The open control system according to claim 12, further comprising a network management system (NMS) on the ATM network and an NMS agent that runs within an element manager card provided in an ATM switch, wherein the NMS agent and NMS manager communicate with each other and the NMS agent coordinates local network management operations including VPN management, protocol downloading, device configuration, resource configuration, measurement and billing.

21. An open control system for a multiprocessor ATM switch in an ATM network including a plurality of multiprocessor ATM switches, characterized by:
a port hardware access interface (PHAI) providing access to line card resources; and
a signaling protocol access interface (SPAI) which is connected to a signaling protocol module and implements switch controller functionality,
wherein call processing is distributed across a plurality of processors within the multiprocessor ATM switch with load balancing and sharing and protocol downloading dynamically provided, wherein the PHAI and the SPAI communicate with each other using at least one mechanism depending on a processing platform used.

22. The open control system according to claim 21, wherein a plurality of protocol modules are distributed across line cards and switch controllers for achieving call processing load balancing.

23. The open control system according to claim 22, wherein the load balancing is done by exploiting line independence of the plurality of protocol modules, wherein when a line card faces a bottle-neck a new protocol module is initiated on a different line card and the new line card remotely controls the line card facing the bottle-neck.

24. The open control system according to claim 21, wherein the PHAI and the SPAI communicate using one of a combination of virtual path and virtual channel, a bus-based communication mechanism and a distributed message passing mechanism.

25. The open control system according to claim 21, wherein call control is independent of location and the call control can be performed remotely.

26. The open control system according to claim 24, wherein the distributed message passing mechanism is at least one remote procedure call.

27. The open control system according to claim 24, wherein the distributed message passing mechanism is an object resource broker (ORB).

28. The open control system according to claim 24, wherein the distributed message passing mechanism is done using operating system primitives.

29. An open control method for distributed signaling for ATM switches in the ATM network, wherein protocol modules are distributed across available processors on line cards and switch controllers in a modular fashion, characterized by the steps of:
(a) receiving a connection request at an incoming port;
(b) sending a corresponding message to a UNI/NNI module;
(c) executing call admission control at the UNI/NNI module for the incoming port;
(d) making the call admission control decision based on available quality of service;
(e) making routing decision for output port;
(f) contacting a UNI/NNI module for the output port;
(g) repeating steps c-d for the output port; and
(h) sending a connection request to next hop switch.

30. An open control method for creating at least one VPN which is overlaid on the ATM network composed of a network management system (NMS) manager and a plurality of ATM switches each having a central protocol manager module (CPMM) and an NMS agent therein, wherein a port hardware access interface (PHAI) provides access to line card resources, a signaling protocol access interface (SPAI) is connected to a signaling protocol module and implements switch controller functionality, a plurality of port resource managers (PRMs) logically partitions available resources and bundling a partitioned resource into VPN (virtual private network) specific resource module (VPNRM), the VPNRMs being allocated to at least one VPN which is overlaid on the ATM network, characterized by the steps of:
instructing the NMS agent by the NMS manager for creating the VPN and providing VPN-specific information;
performing authentication and validation by the NMS agent and forwarding a request to the CPMM;
sending configuration request from the CPMM to the plurality of PRMs;
configuring the plurality of VPNRMs by the PRMs with specified amount of resources required and sending a fault message if the resources are not available;
communicating with the CPMM by the PRMs to obtain a reference for a desired control protocol module for a switch;
passing the VPNRM configuration information by the PRMs to the signaling protocol module;
creating binding between the VPNRMs and corresponding signaling modules;
sending control message demultiplexing information to the line card; and
sending information on one of success and failure to the CPMM, NMS agent and NMS manager.
